# EUROPÄISCHE PATENTANMELDUNG

(11) **EP 4 847 583 A1**
(43) Veröffentlichungstag der Anmeldung: **02.12.2026**
(21) Anmeldenummer: 25178974.9
(22) Anmeldetag: 27.05.2025
(51) Int. Cl.: C09K 23/00, C09K 21/00

(54) **ZUSAMMENSETZUNG ZUM AUFSCHÄUMEN**

(71) Anmelder: Cuylits Holding GmbH, 49593 Bersenbrück (DE)
(72) Erfinder: Fährmann, Jan, 49593 Bersenbrück (DE)
(74) Vertreter: Gille Hrabal Partnerschaftsgesellschaft mbB Patentanwälte

(57) **Zusammenfassung**

Beschrieben wird eine Zusammensetzung, ein Verfahren zu deren Her-stellung sowie deren Verwendung zur Erzeugung eines Schaumes. Der ausgehend von der Zusammensetzung erhaltene Schaum kann unter anderem als Bauschaum, Brandschutzschaum oder zur Herstellung von Brandschutzmaterialien verwendet werden. Ein weiterer Gegenstand der vorliegenden Erfindung ist der ausgehend von der Zusammensetzung erhaltene Schaum, insbesondere Bauschaum oder Brandschutzschaum, sowie die ausgehend von der Zusammensetzung erhaltenen Brandschutzmaterialien. Darüber hinaus betrifft die vorliegende Erfindung ein Verfahren zur Herstellung von Schäumen und Brandschutzmaterialien ausgehend von der erfindungsgemäßen Zusammensetzung und eine Kartusche, enthaltend die erfindungsgemäße Zusammensetzung.

## Beschreibung

Die vorliegende Erfindung betrifft eine Zusammensetzung, ein Verfahren zu deren Herstellung sowie deren Verwendung zur Erzeugung eines Schaumes. Der ausgehend von der Zusammensetzung erhaltene Schaum kann unter anderem als Bauschaum, Brandschutzschaum oder zur Herstellung von Brandschutzmaterialien verwendet werden. Ein weiterer Gegenstand der vorliegenden Erfindung ist der ausgehend von der Zusammensetzung erhaltene Schaum, insbesondere Bauschaum oder Brandschutzschaum, sowie die ausgehend von der Zusammensetzung erhaltenen Brandschutzmaterialien. Darüber hinaus betrifft die vorliegende Erfindung ein Verfahren zur Herstellung von Schäumen und Brandschutzmaterialien ausgehend von der erfindungsgemäßen Zusammensetzung und eine Kartusche, enthaltend die erfindungsgemäße Zusammensetzung.

Aus dem Stand der Technik sind Schaummaterialien bekannt, die im Bereich Brandschutz Anwendung finden.

So offenbart die EP 2 571 829 A ein Verfahren zur Herstellung von Formkörpern für Brandschutzmaterialien aus Zusammensetzungen, bestehend aus mindestens zwei unterschiedlichen Natriumwassergläsern spezifischer Viskosität. EP 2 571 829 A offenbart weiterhin die Verwendung von mit Treibgas gefüllten Mikrohohlkugeln zur Aufblähung dieser Zusammensetzung, wobei die Aufblähung unter Energieeinwirkung auf die Mikrohohlkugeln erfolgt.

EP 3 732 147 A offenbart ein Verfahren zur Herstellung eines festen Brandschutzmaterials, insbesondere in der Form einer Brandschutzplatte, wobei zunächst eine erste Zusammensetzung, enthaltend mindestens ein Wasserglas und mit Treibgas versehene Mikrohohlkugeln, bereitgestellt wird, und dann die Mikrohohlkugeln durch die Zugabe von einem Lösemittel in einer zweiten Zusammensetzung unter Freisetzung von Treibmitteln aufgebrochen werden.

WO 2019/110835 A offenbart eine Kombination, umfassend eine erste Zusammensetzung und eine zweite Zusammensetzung, wobei die erste Zusammensetzung Mikrohohlkugeln und die zweite Zusammensetzung ein Lösemittel zum Öffnen dieser Mikrohohlkugeln enthält und die erste Zusammensetzung und/oder die zweite Zusammensetzung ein anorganisches und/oder organisches Bindemittel enthalt, wobei die Mikrohohlkugeln eine Polymerhülle aufweisen und ein Treibmittel enthalten. Auch in dieser Druckschrift erfolgt eine Freisetzung des Treibgases durch lösemittelbasierte Umsetzung der Mikrohohlkugeln.

Nachteilig an diesen aus dem Stand der Technik bekannten Zusammensetzungen ist, dass die resultierenden Schäume im Allgemeinen kein zufriedenstellendes Aushärteverhalten mit gleichzeitiger mechanischer Stabilität des resultierenden Schaumes aufweisen.

Eine weitere Anforderung an diesen Zweikomponenten-Systemen des Standes der Technik besteht darüber hinaus darin, die Gefahr von inhomogenen Verteilungen zwischen den beteiligten Komponenten bei Applikation (d.h. beim Aufschäumen) möglichst zu vermeiden, um eine effiziente Bereitstellung des Schaumes zu erreichen.

Darüber hinaus ist der Stand der Technik auch im Hinblick auf das Verhältnis von Gesamtdichte und Stabilität des ausgehärteten Schaumes nachteilig, da in der Regel in die resultierenden Schaumsystemen eine Vielzahl an Hohlräumen eingetragen werden. Zwar ist die Wärmedämmung tendenziell bei mehreren Hohlräumen besser, aber gleichzeitig verringert sich auch die die mechanische Stabilität mit steigendem Anteil an Hohlräumen im Schaum. Hier muss erfindungsgemäß Balance gefunden werden,

Zudem kann ein weiterer Nachteil des Standes der Technik darin gesehen werden, dass keine ausreichende homogene Verteilung von Hohlkörpern in den resultierenden Brandschutzmaterialien erreicht werden kann. Viele kleine und gleichmäßige Hohlräume machen das Produkt isolierender und trotzdem stabiler als wenige große Hohlräume.

Ferner sind die bekannten Zusammensetzungen nachteilig, weil sie das erforderliche Volumen als Treibgas zum Aufschäumen aufweisen müssen, also voluminös sind, bevor sie aufgeschäumt werden.

Ein weiterer Nachteil der aus dem Stand der Technik bekannten Materialien ist ferner ihr zum Teil hoher Anteil an organischen Bestandteilen, der zu einer schlechten Brandschutzwirkung und Temperaturstabilität führt. Dieser Anteil an organischen Bestandteilen ist nicht zuletzt auf die Gegenwart von den mit Treibgas versehenen Mikrohohlkugeln zurückzuführen, aus welchen das erforderliche Treibgas freigesetzt wird. Wenn in diesen Systemen auf Basis von Mikrohohlkugeln ein höherer Schaumfaktor, also mehr Schaum, erzeugt werden soll, geht dieses mit einem höheren Anteil an organischen Bestandteilen aus den Mikrohohlkugeln einher, was wiederum aufgrund der darin enthaltenen organischen Bestandteile nachteilig ist.

Ein weiterer Nachteil an den aus dem Stand der Technik bekannten Systemen auf Basis von Mikrohohlkugeln ist, dass die Aufschäumgeschwindigkeit nur schwierig anzupassen ist.

Zusätzlich wird in den Systemen, in denen Mikrohohlkugeln zum Aufschäumen verwendet werden, in der Regel Isobutan beim Aufschäumen freigesetzt, was in großen Mengen umweltliche Nachteile mit sich bringt.

Die aus dem Stand der Technik bekannten zum Aufschäumen verwendeten Mikrohohlkugeln sind zudem unlösliche, feste Kügelchen, die eine Suspension bilden, was ebenfalls nachteilig sein kann. Nach einiger Lagerzeit und/oder einigen Temperaturschwankungen kann es zu einer inhomogenen Verteilung der Kügelchen. Entweder durch Sedimentation (Absetzen am Boden) oder durch Agglomeration (Klumpenbildung) schäumt das Material nicht mehr gleichmäßig und gut auf.

Weiterhin ist ein relevanter Nachteil der Mikrohohlkugeln, dass sie in trockener Pulverform problematisch in der Produktherstellung sein können (Staubbildung! und theoretisch damit die verbundene Möglichkeit einer Staubexplosion) besteht.

Erfindungsgemäß nachgesucht wird also eine Zusammensetzung, welche zur Herstellung von Brandschutzmaterialien, wie Schäumen, dienen kann und mit welcher die vorstehend beschriebenen Nachteile wenigstens partiell gelöst werden können. Dabei soll sich die erfindungsgemäße Zusammensetzung insbesondere für Materialien auf Wasserglasbasis eignen.

Erfindungsgemäß wird daher nach einer Zusammensetzung gesucht, die ein ausreichendes Aushärteverhältnis aufweist, zu einem Schaum mit homogenen Verteilungen führt, eine gesteuerte Anzahl an Hohlräumen aufweist, wenig voluminös ist, einen geringen Anteil an organischen Bestandteilen aufweist, eine einfach zu steuernde Aufblähgeschwindigkeit ermöglicht und/oder keine umweltschädigenden Bestandteile bei deren Verwendung freisetzt,

Zusätzlich soll eine Zusammensetzung zur Erzeugung eines Schaumes zur Verfügung gestellt werden, die eine Schaumbildung ohne äußere Zufuhr von Wärme ermöglicht.

Die unter Verwendung der Schaummassen herstellbaren Baumaterialien, wie Ortschäume oder Leichtbauplatten, sollen möglichst brandfest sein und/oder eine gute Biegefestigkeit aufweisen. Besonders vorteilhaft ist zudem eine gute Wärmeisolierung der erhaltenen Materialien.

Eine oder mehrere dieser Aufgaben der vorliegenden Erfindung wird durch eine Zusammensetzung, enthaltend
(1) eine erste Komponente, umfassend eine organische Verbindung, welche durch Oxidation mindestens ein Treibgas freisetzt;
(2) eine zweite Komponente, umfassend ein Oxidationsmittel zum Freisetzen des mindestens einen Treibgases durch chemische Reaktion aus der organischen Verbindung, und
(3) eine dritte Komponente, umfassend mindestens ein Wasserglas, gelöst.

Erfindungsgemäß ist somit eine Zusammensetzung vorgesehen, die auf Wasserglas basiert (Komponente (3)).

Wasserglas, auch bekannt als Natriumsilikat oder Kaliumsilikat, besitzt Brandschutzeigenschaften und wird daher bereits heute in verschiedenen Bereichen des vorbeugenden Brandschutzes eingesetzt. Die wichtigsten Eigenschaften von Wassergläsern sind einerseits ihre Feuerbeständigkeit, da Wassergläser anorganisch sind und keine brennbaren Bestandteile enthalten, und andererseits ihre Hitzebeständigkeit, da Wassergläser sehr hohe Temperaturen (über 1000 °C) überstehen, ohne sich zu zersetzen oder zu entzünden. In Kombination mit anderen Materialien (z. B. Zement oder Kaolin (Perlite)) trägt Wasserglas zur Wärmeisolation bei, was die Ausbreitung von Bränden verlangsamt, und beim Erhitzen bildet Wasserglas eine glasartige, harte Schicht, die darunterliegende Materialien (z. B. Holz, Stahl) vor direkter Flammeneinwirkung schützt. Diese Schicht wirkt versiegelnd und verhindert, dass Sauerstoff zum Brennstoff gelangt, wodurch die Verbrennung gehemmt wird. Ferner sind Wassergläser rauchgashemmend, da sie keine toxischen oder brennbaren Rauchgase erzeugen, welche im Brandfall die Sicht und die Atemluft gefährden.

Damit Wasserglas als resultierender Schaum zu Brandschutzzwecken verwendet werden kann, ist es erforderlich, dass das Wasserglas zu einem Schaum aufgeschäumt und gehärtet wird. Das Aufschäumen und Aushärten von Wassergläsern ist bekannt und erfolgt beispielsweise durch Erzeugung von Treibgasen in Gegenwart von Wassergläsern.

Die bisherigen Zusammensetzungen auf Wasserglasbasis, die aufgeschäumt und gehärtet werden, enthalten in der Regel Mikrohohlkugeln, in welchen ein Treibgas eingeschlossen ist. Diese Zusammensetzungen weisen die vorstehend genannten Nachteile auf.

Erfindungsgemäß wird demgegenüber die Verwendung von zwei weiteren Bestandteilen in der Wasserglas enthaltenden erfindungsgemäßen Zusammensetzung empfohlen.

Bei diesen beiden Bestandteilen handelt es sich einerseits um eine organische Verbindung, welche durch Oxidation mindestens ein Treibgas freisetzt, sowie um ein Oxidationsmittel zum Freisetzen des mindestens einen Treibgases durch chemische Reaktion aus der organischen Verbindung.

Erfindungswesentlich ist, dass diese beiden weiteren Bestandteilen aus der organischen Verbindung und dem Oxidationsmittel erst dann unter Freisetzung mindestens eines Treibgases reagieren, wenn dieses gewünscht und initiiert wird. Zu diesem Zweck werden die einzelnen zuvor genannten Komponenten (1) bis (3) der erfindungsgemäßen Zusammensetzung wenigstens teilweise separat vorgehalten. Erfindungsgemäß ist somit ein Kit-of-parts vorgesehen, in welchen die einzelnen Bestandteile der erfindungsgemäßen Zusammensetzung räumlich voneinander getrennt vorliegen, gleichwohl in Kontakt gebracht werden können. Dieses Kit-of-parts umfasst räumliche nebeneinander die vorstehend genannten funktionell aufeinander abgestimmten Einzelkomponenten (1) bis (3).

Daher betrifft die vorliegende Erfindung insbesondere eine Zusammensetzung, in welcher die erste bis dritte Komponente wenigstens teilweise voneinander getrennt vorliegen.

In einer ersten diesbezüglichen Ausführungsform liegen die erste und zweite Komponente voneinander getrennt und die erste und dritte Komponente zusammen vor.

In einer zweiten diesbezüglichen Ausführungsform liegen die erste und zweite Komponente zusammen und die dritte Komponente getrennt von der ersten und zweiten Komponente vor.

Durch dieses räumlich getrennte Vorliegen der einzelnen Komponenten der erfindungsgemäßen Zusammensetzung kann ein unerwünschtes Aufschäumen der erfindungsgemäßen Zusammensetzung verhindert werden.

Ist jedoch ein Aufschäumen der Zusammensetzung erwünscht, wird die räumliche Trennung der Bestandteile aufgehoben und die funktionell aufeinander abgestimmten Einzelkomponenten miteinander umgesetzt.

In einer bevorzugten Ausführungsform ist die erfindungsgemäße Zusammensetzung durch einen Aufbau gekennzeichnet, in welchem eine erste Komponente, umfassend mindestens ein Wasserglas und eine organische Verbindung, welche durch Oxidation mindestens ein Treibgas freisetzt, vorliegt und hiervon getrennt eine zweite Komponente, umfassend ein Oxidationsmittel zum Freisetzen des mindestens einen Treibgases durch chemische Reaktion aus der organischen Verbindung, vorliegt.

In diesem Fall ist der pH-Wert der ersten Komponente der Zusammensetzung vorzugsweise 9 bis 14, bevorzugt 9 bis 13, weiter bevorzugt 9 bis 12, während der pH-Wert der zweiten Komponente der Zusammensetzung 2 bis 7, bevorzugt 3 bis 6, weiter bevorzugt 4 bis 5, ist.

Durch das Inkontaktbringen dieser beiden Komponenten unterschiedlichen pH-Wertes wird die Umsetzung der organischen Verbindung mit dem Oxidationsmittel ausgelöst und das Treibgas freigesetzt.

Im Rahmen der vorliegenden Erfindung ist das Oxidationsmittel vorzugsweise ausgewählt aus der Gruppe, bestehend aus Peroxiden, Hypochloriten, Hypochlorige Säure, Permanganaten, lodaten, Periodaten und Persulfaten.

Im Rahmen der vorliegenden Erfindung ist das Oxidationsmittel weiter bevorzugt ausgewählt aus der Gruppe, bestehend aus Wasserstoffperoxid, Permanganate und Natriumhypochlorit.

Sollten als Oxidationsmittel Salze verwendet werden, so kann das korrespondierende Kation zur Anpassung der Löslichkeit gewählt werden.

Im Rahmen der vorliegenden Erfindung ist die organische Verbindung, die durch Oxidation mindestens ein Treibgas freisetzt, vorzugsweise ausgewählt aus der Gruppe, bestehend aus Carbonsäuren, Carbonsäureestern und deren Salzen (Carbonsäuresalzen).

In einer bevorzugten Ausführungsform ist die ein Treibgas freisetzende organische Verbindung kein Carbonat.

Wenn im Rahmen der vorliegenden Erfindung eine Carbonsäure als organische Verbindung verwendet wird, so kann es sich hierbei um eine Mono-, Di- oder Tricarbonsäure handeln.

Ein Beispiel für erfindungsgemäß geeignete Monocarbonsäuren ist Essigsäure und ein Beispiel für eine Tricarbonsäure ist Zitronensäure.

Beispiele für erfindungsgemäß geeignete Dicarbonsäuren sind Oxalsäure, Weinsäure, Dioxobernsteinsäure, Mesoxalsäure, Bernsteinsäure und Tartronsäure.

Im Rahmen der vorliegenden Erfindung ist es unter dem Gesichtspunkt der Funktion der organischen Verbindung als Treibgasquelle bevorzugt, eine Dicarbonsäure zu verwenden.

Daher werden bevorzugte Beispiele für die organische Verbindung insbesondere ausgewählt aus der Gruppe, bestehend aus Oxalsäure, Weinsäure und Dioxobernsteinsäure.

Die organische Verbindung, die in der erfindungsgemäßen Zusammensetzung verwendet wird, kann auch das Salz einer Carbonsäure sein.

Als Carbonsäuren der Carbonsäuresalze kommen alle vorstehend genannten Carbonsäuren in Frage.

Die Umsetzung der organischen Verbindung mit dem Oxidationsmittel kann in einer weiteren Ausführungsform in der Gegenwart eines Katalysators durchgeführt werden. Der Katalysator dient im Rahmen der vorliegenden Erfindung insbesondere zur Beschleunigung der Reaktion zwischen der organischen Verbindung und dem Oxidationsmittel. Ein Katalysator ist aber nicht zwingend für die vorliegende Erfindung erforderlich.

Daher umfasst in einer Ausführungsform die erfindungsgemäße Zusammensetzung zusätzlich einen Katalysator für die Umsetzung der organischen Verbindung mit dem Oxidationsmittel.

Wie vorstehend erläutert, liegen die einzelnen Bestandteile als funktionell aufeinander abgestimmte Einzelkomponenten der erfindungsgemäßen Zusammensetzung zumindest teilweise als Kit-of-parts nebeneinander vor.

In einer dritten Ausgestaltung umfasst die Zusammensetzung
eine erste Komponente,
   enthaltend mindestens ein Oxidationsmittel zum Freisetzen des mindestens einen Treibgases durch chemische Reaktion aus der organischen Verbindung und mindestens ein Wasserglas,
   und
eine zweite Komponente,
   enthaltend mindestens eine organische Verbindung, welche durch Oxidation mindestens ein Treibgas freisetzt, und gegebenenfalls mindestens einen Katalysator.

Daher kann der erfindungsgemäß vorgesehene Katalysator zusammen mit der ersten Komponente, mit der zweiten Komponente oder dritten Komponente in der erfindungsgemäßen Zusammensetzung vorliegen.

Der Katalysator wird vorzugsweise ausgewählt aus der Gruppe, bestehend aus Salz- und Oxidverbindungen von Eisen(II), Eisen(III), Kupfer(II), Mangan(II), Mangan(IV), Cobalt(II) und Wolframat(IV).

Von den vorgenannten Katalysatoren sind insbesondere Eisen(II)salze bevorzugt.

In der erfindungsgemäßen Zusammensetzung beträgt die Menge an organischer Verbindung vorzugsweise 0,3 bis 14 %, bevorzugt 0,3 bis 10 %, weiter bevorzugt 0,7 bis 7 %, jeweils bezogen auf das Gesamtgewicht der Zusammensetzung.

In der erfindungsgemäßen Zusammensetzung beträgt die Menge an Oxidationsmittel vorzugsweise 0,15 bis 20 %, bevorzugt 0,15 bis 7 %, weiter bevorzugt 0,3 bis 4,0 %, jeweils bezogen auf das Gesamtgewicht der Zusammensetzung.

In der erfindungsgemäßen Zusammensetzung beträgt die Menge an organischer Verbindung vorzugsweise 0,3 bis 14 % und die Menge an Oxidationsmittel vorzugsweise 0,15 bis 20 %, jeweils bezogen auf das Gesamtgewicht der Zusammensetzung.

In der erfindungsgemäßen Zusammensetzung beträgt die Menge an organischer Verbindung bevorzugt 0,3 bis 10 % und die Menge an Oxidationsmittel bevorzugt 0,15 bis 7 %, jeweils bezogen auf das Gesamtgewicht der Zusammensetzung.

In der erfindungsgemäßen Zusammensetzung beträgt die Menge an organischer Verbindung weiter bevorzugt 0,3 bis 4 % und die Menge an Oxidationsmittel weiter bevorzugt 0,3 bis 4,0 %, jeweils bezogen auf das Gesamtgewicht der Zusammensetzung.

In der erfindungsgemäßen Zusammensetzung beträgt die Menge an dem mindestens einen Wasserglas vorzugsweise 15 bis 70 %, bevorzugt 30 bis 60 %, weiter bevorzugt 35 bis 50 % jeweils bezogen auf das Gesamtgewicht der Zusammensetzung.

In der erfindungsgemäßen Zusammensetzung beträgt die Menge an organischer Verbindung vorzugsweise 0,3 bis 14 %, die Menge an Oxidationsmittel vorzugsweise 0,15 bis 20 % und die Menge an dem mindestens einen Wasserglas vorzugsweise 15 bis 70 %, jeweils bezogen auf das Gesamtgewicht der Zusammensetzung.

In der erfindungsgemäßen Zusammensetzung beträgt die Menge an organischer Verbindung bevorzugt 0,3 bis 10 %, die Menge an Oxidationsmittel bevorzugt 0,15 bis 7 % und die Menge an dem mindestens einen Wasserglas bevorzugt 30 bis 60 %, jeweils bezogen auf das Gesamtgewicht der Zusammensetzung.

In der erfindungsgemäßen Zusammensetzung beträgt die Menge an organischer Verbindung weiter bevorzugt 0,7 bis 7 % und die Menge an Oxidationsmittel weiter bevorzugt 0,3 bis 4,0 % und die Menge an dem mindestens einen Wasserglas weiter bevorzugt 35 bis 50 %, jeweils bezogen auf das Gesamtgewicht der Zusammensetzung.

In der erfindungsgemäßen Zusammensetzung beträgt die Menge an dem Katalysator vorzugsweise 0,03 bis 10 %, bevorzugt 0,07 bis 4 %, weiter bevorzugt 0,15 bis 3,0 %, jeweils bezogen auf das Gesamtgewicht der Zusammensetzung.

In der erfindungsgemäßen Zusammensetzung beträgt die Menge an organischer Verbindung vorzugsweise 0,3 bis 14 %, die Menge an Oxidationsmittel vorzugsweise 0,15 bis 20 %, die Menge an dem mindestens einen Wasserglas vorzugsweise 15 bis 70 % und die Menge an dem Katalysator vorzugsweise 0,03 bis 10 %, jeweils bezogen auf das Gesamtgewicht der Zusammensetzung.

In der erfindungsgemäßen Zusammensetzung beträgt die Menge an organischer Verbindung bevorzugt 0,3 bis 10 %, die Menge an Oxidationsmittel bevorzugt 0,15 bis 7 %, die Menge an dem mindestens einen Wasserglas bevorzugt 30 bis 60 % und die Menge an dem Katalysator bevorzugt 0,07 bis 4 %, jeweils bezogen auf das Gesamtgewicht der Zusammensetzung.

In der erfindungsgemäßen Zusammensetzung beträgt die Menge an organischer Verbindung weiter bevorzugt 0,7 bis 7 %, die Menge an Oxidationsmittel weiter bevorzugt 0,3 bis 4,0 %, die Menge an dem mindestens einen Wasserglas weiter bevorzugt 35 bis 50 % und die Menge an dem Katalysator weiter bevorzugt 0,15 bis 3,0 %, jeweils bezogen auf das Gesamtgewicht der Zusammensetzung.

Die erfindungsgemäße Zusammensetzung kann weitere übliche Bestandteile für Brandschutzmaterialien verwenden.

Hierzu zählen beispielsweise Fasern. Fasern, die in einen Schaum eingebracht werden, übernehmen dabei mehrere Funktionen, welche die mechanischen, thermischen und brandschutztechnischen Eigenschaften des Schaums verbessern. So verbessern Fasern beispielsweise die Druck- und Zugfestigkeit des Schaums. Zusätzlich wirken sie als sogenannte Rissstopper und verhindern das Wachstum von Mikrorissen im Material. Auch die Zähigkeit des resultierenden Schaums wird durch die Additivierung mit Fasern verbessert, da das Material weniger spröde und widerstandsfähiger gegenüber mechanischer Belastung wird. Bestimmte Faserarten (z. B. Glas- oder Keramikfasern) halten hohen Temperaturen stand und stabilisieren den Schaum im Brandfall und fördern die Bildung einer festen Ascheschicht, die als Barriere gegen Hitze und Flammen dient. Eine weitere Funktion von Fasern ist die Stabilisierung der resultierenden Struktur, auch wenn der Restbestandteil des Schaums bereits zu schmelzen oder zu verkohlen beginnt. Schließlich tragen Fasern in Kombination mit den Gasbläschen des Schaums zur Wärmedämmung bei, da sie die Wärmeleitung innerhalb des Schaums weiter einschränken können, und können das Aufschäumen stabilisieren, indem sie die Blasenstruktur mechanisch stützen. Damit verhindern die Fasern ein Zusammenfallen des Schaums während des Aushärtens.

Im Rahmen der vorliegenden Erfindung umfasst die Zusammensetzung beispielsweise Fasern, ausgewählt aus der Gruppe, bestehend aus Silikatfasern, AR-Glasfasern, ECR-Glasfasern, Silikatglasfasern, Mineralfasern, Naturfasern, organische Fasern, insbesondere auf Basis von Polyethylenterephthalat, Polyacrylfasern und Polyamid.

Um die vorteilhaften Eigenschaften der Faseradditivierung zu erreichen, umfasst die Zusammensetzung Fasern in einer Menge von vorzugsweise 0,1 bis 10 %, bevorzugt 0,1 bis 8 %, weiter bevorzugt 0,2 bis 6 %, weiter bevorzugt 0,2 bis 4 %, weiter bevorzugt 0,3 bis 2 %, jeweils bezogen auf das Gesamtgewicht der Zusammensetzung, enthält.

In der vorliegenden Erfindung hat sich herausgestallt, dass für die angestrebte Verwendung der erfindungsgemäßen Zusammensetzung es besonders bevorzugt ist, wenn die Zusammensetzung Silikatfasern enthält.

Silikatfasern sind eine Gruppe von Fasern, die auf Silikaten basieren - mineralischen Verbindungen, die hauptsächlich aus Silizium (Si) und Sauerstoff (O) bestehen. Silikatfasern können aus natürlichen Silikaten (wie Asbest) oder synthetisch hergestellten Silikatmaterialien (wie Glas- oder Mineralfasern) bestehen.

Es gibt verschiedene Typen von Silikatfasern, die sich aufgrund ihrer chemischen Zusammensetzung, ihrer Herstellungsverfahren und ihrer spezifischen Eigenschaften unterscheiden und gemäß der vorliegenden Erfindung verwendet werden können:
Glasfasern sind eine der bekanntesten Formen von Silikatfasern. Sie bestehen aus amorphem Siliciumdioxid (SiO₂) und anderen Bestandteilen wie Aluminiumoxid (Al₂O₃), Bortrioxid (B₂O₃) und Kalciumoxid (CaO). Glasfasern sind nicht kristallin, was bedeutet, dass sie eine unregelmäßige atomare Struktur haben. Sie sind aufgrund ihrer hohen Festigkeit, Flexibilität und Beständigkeit gegen hohe Temperaturen und Chemikalien weit verbreitet.

Mineralfasern, auch als Steinwolle oder Mineralwolle bekannt, bestehen aus einer Mischung aus Silikatmaterialien, insbesondere basaltischen oder Diabas-Materialien, die bei hohen Temperaturen geschmolzen und dann zu Fasern verarbeitet werden.

Keramikfasern bestehen hauptsächlich aus Siliciumdioxid und anderen Metalloxiden wie Aluminiumoxid (Al₂O₃) oder Magnesiumoxid (MgO) und haben eine kristalline Struktur. Sie sind für Anwendungen geeignet, bei denen hohe Temperaturen und extreme chemische Beständigkeit erforderlich sind.

Die vorgenannten Silikatfasern zeichnen sich durch eine Reihe von außergewöhnlichen physikalischen, chemischen und mechanischen Eigenschaften aus, die sie für die Anwendung in der vorliegenden Erfindung besonders geeignet machen:
So sind Silikatfasern, insbesondere Glas- und Keramikfasern, in der Lage, extrem hohe Temperaturen zu widerstehen, ohne ihre strukturelle Integrität zu verlieren. Glasfasern können Temperaturen von bis zu 1000 °C standhalten, während Keramikfasern noch höheren Temperaturen widerstehen können. Diese Fasern haben darüber hinaus exzellente Wärmeisolierungseigenschaften und sind gegenüber vielen Chemikalien stabil und widerstandsfähig. Sie sind insbesondere beständig gegen Säuren und Basen sowie gegen viele organische Lösungsmittel.

Silikatfasern sind darüber hinaus mechanisch stark und haben eine hohe Zugfestigkeit, was sie für die Herstellung von Verstärkungsfasern in Verbundmaterialien geeignet macht.

Silikatfasern sind in der Regel nicht brennbar und weisen daher in dem erfindungsgemäßen Anwendungsbereich des Brandschutzes Vorteile auf.

In einer ersten Ausgestaltung der vorliegenden Erfindung sind die Silikatfasern in der Zusammensetzung von mindestens 0,1 %, bevorzugt mindestens 0,2 %, weiter bevorzugt mindestens 0,3 %, weiter bevorzugt mindestens 0,4 %, weiter bevorzugt mindestens 0,5 %, jeweils bezogen auf das Gesamtgewicht der Zusammensetzung, enthalten.

In einer zweiten Ausgestaltung der vorliegenden Erfindung sind die Silikatfasern in der Zusammensetzung in einer Menge von höchstens 10 %, bevorzugt höchstens 8 %, weiter bevorzugt höchstens 6 %, weiter bevorzugt höchstens 4 %, weiter bevorzugt höchstens 2 %, weiter bevorzugt höchstens 1 %, weiter bevorzugt höchstens 0,8 %, weiter bevorzugt höchstens 0,7 %, jeweils bezogen auf das Gesamtgewicht der Zusammensetzung, enthalten.

In einer besonderen Ausgestaltung der vorliegenden Erfindung sind die Silikatfasern in der Zusammensetzung in einer Menge von 0,1 bis 10 %, bevorzugt 0,1 bis 8 %, weiter bevorzugt 0,2 bis 6 %, weiter bevorzugt 0,2 bis 4 %, weiter bevorzugt 0,3 bis 2 %, weiter bevorzugt 0,3 bis 1 %, weiter bevorzugt 0,4 bis 0,8 %, weiter bevorzugt 0,5 bis 0,7 %, jeweils bezogen auf das Gesamtgewicht der Zusammensetzung, enthalten.

Durch den Zusatz an Silikatfasern in der ersten Komponente kann der organische Anteil in der erfindungsgemäßen Zweikomponenten-Zusammensetzung verbessert werden, was Vorteile im Hinblick auf die Brandklasse, Temperaturstabilität, der CO₂-Belastung und der Abfallentsorgung mit sich bringt.

Durch Zugabe der Silikatfaser kann, wie bereits vorstehend ausgeführt, die mechanische Stabilität des aus der erfindungsgemäßen Zusammensetzung resultierenden Schaumes verbessert werden.

Im Rahmen der vorliegenden Erfindung hat sich dabei herausgestellt, dass je länger die eingesetzte Silikatfaser ist, desto höher auch die mechanische Stabilität ist. In der Praxis ergeben sich jedoch zwei Probleme beim Einsatz von zu langen Fasern:
In einem Schaum auf Basis der erfindungsgemäßen Zusammensetzung muss in der Anwendungspraxis ein sogenannter Statikmischer auf die üblicherweise verwendete Kartusche, in welcher die Komponenten separat vor dem Mischen aufbewahrt werden, aufgeschraubt werden. Bei dieser Kartusche handelt es sich um ein Kunststoff-Teil mit vielen Windungen, das für eine homogene Verteilung der einzelnen Komponenten sorgen soll. Lange Silikatfasern können sich in diesen Windungen verfangen und sie somit verstopfen.

Darüber hinaus neigen zu lange Silikatfasern in Mischbehältern zur "Nestbildung". Die Fasern können sich ineinander verschlingen und so inhomogen ansammeln oder im Extremfall verknoten.

Kurze Fasern lassen sich hier besser handhaben und auch in der Produktion verarbeiten.

Daraus resultiert erfindungsgemäß eine mittlere Faserlänge der Silikatfasern von vorzugsweise höchstens 7 mm, bevorzugt höchstens 6 mm, weiter bevorzugt höchstens 5 mm, weiter bevorzugt höchstens 4 mm, weiter bevorzugt höchstens 3,5 mm.

Daraus resultiert erfindungsgemäß ferner eine mittlere Faserlänge der Silikatfasern von vorzugsweise mindestens 0,5 mm, bevorzugt mindestens 1 mm, weiter bevorzugt mindestens 1,5 mm, weiter bevorzugt mindestens 2 mm, weiter bevorzugt mindestens 2,5 mm.

Daraus resultiert erfindungsgemäß ferner eine mittlere Faserlänge der Silikatfasern von vorzugsweise 0,5 bis 7 mm, bevorzugt 1 bis 6 mm, weiter bevorzugt 1,5 bis 5 mm, weiter bevorzugt 2 bis 4 mm, weiter bevorzugt 2,5 bis 3,5 mm.

In einer weiteren Ausführungsform der vorliegenden Erfindung enthält die Zusammensetzung ein Metakaolin als Bindemittel.

Wenn ein Metakaolin in der erfindungsgemäßen Zusammensetzung vorhanden ist, so kann dessen Menge 1 bis 60 %, bevorzugt 1 bis 40 %, weiter bevorzugt 1 bis 35 %, jeweils bezogen auf das Gewicht der Zusammensetzung, betragen.

Metakaolin wird als Bindemittel in der erfindungsgemäßen Zusammensetzung verwendet. Metakaolin wird aus kaolinitischem Ton hergestellt und zählt zu den künstlichen Puzzolanen (Kurzzeichen für Zement-Hauptbestandteile nach DIN EN 197-1: Q).

Kaolin (auch: Porzellanerde) ist ein unverfestigtes, weißes Sedimentgestein (Verwitterungsprodukt des Feldspats) aus der großen Gruppe der Tone. Kaolin ist frei von Eisen. Der Ton mit hohem Kaolingehalt wird zur Herstellung des Metakaolins nach Zerkleinerung und thermischer Trocknung calciniert. Metakaolin enthält daher hohe Anteile reaktiver Kieselsäure und weist damit puzzolanische Eigenschaften auf.

Da kaolinitische Tone nicht in großen Mengen zur Verfügung stehen und Metakaolin preisintensiv ist, sind dem Einsatz im Beton als Betonzusatzstoff und bei der Zementherstellung enge Grenzen gesetzt.

Durch die Zugabe von Metakaolin mit hohem Anteil and SiO₂ und Al₂O₃ kann die Wasserstabilität des ausgehärteten Produktes, erhältlich aus der Umsetzung der ersten und der zweiten Komponente, stark erhöht werden.

In einer weiteren Ausführungsform der vorliegenden Erfindung weist die Zusammensetzung eine ablativ-wirkende Verbindung auf.

Wenn die erfindungsgemäße Zusammensetzung eine ablativ-wirkende Verbindung aufweist, so wird die ablativ-wirkende Verbindung vorzugsweise ausgewählt aus der Gruppe, bestehend aus LiNO₃·3H₂O, Na₂CO₃ · H₂O (Thermonatrit), Na₂CO₃ · 7 H₂O, Na₂CO₃ · 10 H₂O (Soda), Na₂Ca(CO₃)₂ · 2 H₂O (Pirssonit), Na₂Ca(CO₃)₂ · 5 H₂O (Gaylussit), Na(HCO₃)Na₂CO₃ · 2 H₂O (Trona), Na₂S₂O₃ · 5 H₂O, Na₂O₃Si · 5 H₂O, KF · 2 H₂O, CaBr₂ · 2 H₂O, CaBr₂ · 6 H₂O, CaSO₄ · 2 H₂O (Gips), Ca(SO₄) · ½ H₂O (Bassanit), Ba(OH)₂ · 8 H₂O, Ni(NO₃)₂ · 6 H₂O, Ni(NO₃)₂ · 4 H₂O, Ni(NO₃)₂ · 2 H₂O, Zn(NO₃)₂ · 4 H₂O, Zn(NO₃)₂ · 6 H₂O, (ZnO)₂(B₂O₃)₂ · 3 H₂O, Mg(NO₃)₂ · 6 H₂O (US 5985013 A), MgSO₄ · 7 H₂O (EP1069172A), Mg(OH)₂, Al(OH)₃, Al(OH)₃ · 3 H₂O, AIOOH (Böhmit), Al₂[SO₄]₃ · n H₂O mit n = 14 - 18, KAl(SO₄)₂ · 12 H₂O (EP1069172A), CaO · Al₂O₃ · 10 H₂O (Nesquehonit), MgCO₃ · 3 H₂O (Wermlandit), Ca₂Mg₁₄(Al,Fe)₄CO₃(OH)₄₂ · 29 H₂O (Thaumasit), Ca₃Si(OH)₆(SO₄)(CO₃) · 12 H₂O (Artinit), Ca₆Al₂[(OH)₁₂|(SO₄)₃] · 26 H₂O (Ettringit), 3 CaO·Al₂O₃ · 3 CaSO₄ · 32 H₂O (Hydromagnesit), Mg₅(OH)₂(CO₃)₄ · 4 H₂O (Hydrocalumit), Ca₄Al₂(OH)₁₄ · 6 H₂O (Hydrotalkit), Mg₆Al₂(OH)₁₆CO₃ · 4 H₂O Alumohydrocalcit, CaAl₂(OH)₄(CO₃)₂ · 3 H₂O (Scarbroit), Al₁₄(CO₃)₃(OH)₃₆ (Hydrogranat), 3 CaO · Al₂O₃ · 6 H₂O (Dawsonit), NaAl(OH)CO₃, Al(OH)₃ (Hydrargillit, ATH), wasserhaltige Zeolithe, Vermikulite, Colemanit, Perlite, Glimmer, Alkalisilikate, Borax, modifizierten Kohlen, Graphiten, Kieselsäuren und Gemischen davon.

Darüber hinaus können weitere im vorliegenden technischen Gebiet übliche Bestandteile in der erfindungsgemäßen Zusammensetzung in üblichen Mengen verwendet werden. Hierzu zählen Bestandteile, die beispielsweise ausgewählt werden aus der Gruppe, bestehend aus mineralischen Additiven, Filterstaub, Flugasche, keramischen Hohlkugeln, Glashohlkugeln, Schaumglasgranulat, Schiefermehl, Quarzmehl, Glimmer, Wollastonit, Calciumcarbonate, Kaolin, Vermiculit, Ettringit sowie Mischungen hiervon.

Insbesondere ist der weitere Bestandteil ausgewählt aus der Gruppe, bestehend aus Kaolin (Perlite), Aluminiumhydroxid, Vermiculiten, Glashohlkugeln, keramischen Hohlkugeln, Calciumcarbonat sowie Mischungen hiervon.

Der Anteil des weiteren Bestandteils kann 5 bis 50 %, bevorzugt 10 bis 40 %, weiter bevorzugt 20 bis 40 %, jeweils bezogen auf das Gesamtgewicht der Zusammensetzung, betragen.

Die erfindungsgemäße Zusammensetzung enthält Wassergläser.

Wassergläser sind wasserhaltige, amorphe Siliciumdioxid-Verbindungen, die durch das Auflösen von Siliciumdioxid (SiO₂) in einer alkalischen Lösung entstehen. Diese Materialien sind eine spezielle Form von Silikaten, die in wässrigen Lösungen existieren und eine gelartige, viskose Konsistenz aufweisen. Wassergläser werden auch als flüssige Glasarten oder flüssige Silikate bezeichnet:
Wasserglas besteht hauptsächlich aus Siliciumdioxid (SiO₂), das in alkalischer Lösung, typischerweise mit Natronlauge (NaOH) oder Kalilauge (KOH), gelöst wird. Die chemische Formel für Wasserglas hängt von der Art des Alkalis (Natrium oder Kalium) ab und ist im Allgemeinen:
Natrium-Wasserglas: Na₂SiO₃
Kalium-Wasserglas: K₂SiO₃

Es handelt sich um eine lösliche Verbindung, die keine kristalline Struktur wie normales Glas aufweist, sondern eine amorphe (unregelmäßige) Struktur, die typisch für viele Silikate ist. Im Gegensatz zu kristallinem Glas hat Wasserglas keine geordnete Atomanordnung. Es handelt sich um ein amorphes Silikat, das in einer gelartigen Form vorliegt und aufgrund seiner Viskosität und chemischen Zusammensetzung als "flüssiges Glas" bezeichnet wird.

Die physikalischen Eigenschaften von Wasserglas variieren je nach Konzentration der Lösung und der Art des Alkalis, das verwendet wurde. Typische Eigenschaften von Wasserglas umfassen:
Löslichkeit in Wasser (Wasserglas ist in Wasser löslich, und je nach Konzentration der Lösung kann es eine gelartige oder flüssige Konsistenz aufweisen), Viskosität (Wasserglas hat eine hohe Viskosität, die mit der Konzentration des Siliciums und der Lauge steigt), alkalisch (Wasserglas hat einen hohen pH-Wert und ist stark alkalisch (basisch), was es in vielen industriellen Anwendungen nützlich macht), Hitzebeständigkeit (Wasserglas ist in der Lage, hohe Temperaturen zu widerstehen, was es für Anwendungen in der Brandbekämpfung und als Isoliermaterial geeignet macht), und geringe Festigkeit im Vergleich zu kristallinem Glas (da Wasserglas keine feste kristalline Struktur besitzt, ist seine Festigkeit begrenzt; es verhält sich eher wie eine gelartige Substanz).

Die Einsatzgebiete des Wasserglases sind vielseitig. Es kann als Flammenschutzmittel eingesetzt werden, da es hochtemperaturbeständig und feuerfest ist. Wasserglas eignet sich auch, um Oberflächen abzudichten. Deswegen kann die erfindungsgemäße Zweikomponenten-Zusammensetzung sowie die daraus resultierenden Schäume vorzugsweise als Oberflächenbeschichtung im Bautenschutz Verwendung finden. Besonders bevorzugt ist die Herstellung von brandfesten Leichtbauplatten.

Erfindungsgemäß als Bindemittel geeignete Wassergläser sind Natrium- oder Kaliumsilikat (Natrium- oder Kalium-Wasserglas), insbesondere mit einem Feststoffgehalt von 25 bis 55 %.

Erfindungsgemäß als Bindemittel bevorzugte Wassergläser sind Natriumsilikat (Natriumwasserglas), insbesondere mit einem Feststoffgehalt von 25 bis 55 %.

Im Rahmen der vorliegenden Erfindung ist es von Vorteil, wenn die erfindungsgemäße Zusammensetzung mindestens zwei unterschiedliche Wassergläser enthält. Dabei ist es insbesondere von Vorteil, wenn die erfindungsgemäße Zusammensetzung mindestens zwei unterschiedliche Natriumwassergläser enthält. Die physikalischen Eigenschaften der Wassergläser lassen sich somit leicht an das gewünschte Optimum anpassen (Viskosität, Dichte, Feststoffgehalt usw.). Hinzukommend führt die Verwendung von zwei Wassergläsern zu einem besseren Blähbild der resultierenden Brandschutzmaterialien.

Wenn die erfindungsgemäße Zusammensetzung zwei Natriumwassergläser enthält, so ist das erste Natriumwasserglas in der Zusammensetzung in einer Menge von vorzugsweise mindestens 8 %, bevorzugt mindestens 15 %, weiter bevorzugt mindestens 20 %, jeweils bezogen auf das Gesamtgewicht der Zusammensetzung, enthalten.

Wenn die erfindungsgemäße Zusammensetzung zwei Natriumwassergläser enthält, so ist das erste Natriumwasserglas in der Zusammensetzung in einer Menge von vorzugsweise höchstens 40 %, bevorzugt höchstens 37 %, weiter bevorzugt höchstens 30 %, jeweils bezogen auf das Gesamtgewicht der Zusammensetzung, enthalten.

Wenn die erfindungsgemäße Zusammensetzung zwei Natriumwassergläser enthält, so ist das erste Natriumwasserglas in der Zusammensetzung in einer Menge von vorzugsweise 8 bis 40 %, bevorzugt 15 bis 37 %, weiter bevorzugt 20 bis 30 %, jeweils bezogen auf das Gesamtgewicht der Zusammensetzung, enthalten.

Wenn die erfindungsgemäße Zusammensetzung zwei Natriumwassergläser enthält, so ist das das zweite Natriumwasserglas in der Zusammensetzung in einer Menge von vorzugsweise mindestens 3 %, bevorzugt mindestens 7 %, weiter bevorzugt mindestens 10 %, jeweils bezogen auf das Gesamtgewicht der Zusammensetzung, enthalten.

Wenn die erfindungsgemäße Zusammensetzung zwei Natriumwassergläser enthält, so ist das zweite Natriumwasserglas in der Zusammensetzung in einer Menge von vorzugsweise höchstens 30 %, bevorzugt höchstens 23 %, weiter bevorzugt höchstens 20 %, jeweils bezogen auf das Gesamtgewicht der Zusammensetzung, enthalten.

Wenn die erfindungsgemäße Zusammensetzung zwei Natriumwassergläser enthält, so ist das zweite Natriumwasserglas in der Zusammensetzung in einer Menge von vorzugsweise 3 bis 30 %, bevorzugt 7 bis 23 %, weiter bevorzugt 10 bis 20 %, jeweils bezogen auf das Gesamtgewicht der Zusammensetzung, enthalten.

Wenn die erfindungsgemäße Zusammensetzung zwei Natriumwassergläser enthält, so weist das erste Natriumwasserglas vorzugsweise eine Viskosität von 300 bis 2400 mPa * s (20 °C), bevorzugt 350 bis 2000 mPa * s (20 °C), weiter bevorzugt 400 bis 1600 mPa * s (20 °C), auf.

Wenn die erfindungsgemäße Zusammensetzung zwei Natriumwassergläser enthält, so weist das erste Natriumwasserglas vorzugsweise mindestens eine weitere der folgenden Eigenschaften auf:
(1) Dichte von 1500 bis 1600 kg/m³, bevorzugt 1520 bis 1580 kg/m³, besonders bevorzugt 1540 bis 1565 kg/m³; und
(2) Wassergehalt von 50 bis 60 Gew.-%, bevorzugt 51 bis 59 Gew.-%, besonders bevorzugt 52 bis 58 Gew.-%.

Wenn die erfindungsgemäße Zusammensetzung zwei Natriumwassergläser enthält, so weist das zweite Natriumwasserglas vorzugsweise eine Viskosität von 75 bis 250 mPa * s (20 °C), bevorzugt von 90 bis 160 mPa * s (20 °C), auf.

Wenn die erfindungsgemäße Zusammensetzung zwei Natriumwassergläser enthält, so weist das zweite Natriumwasserglas vorzugsweise mindestens eine weitere der folgenden Eigenschaften auf:
(1) Dichte von 1300 bis 1500 kg/m³, bevorzugt 1330 bis 1450 kg/m³, besonders bevorzugt 1360 bis 1380 kg/m³; und
(2) Wassergehalt von 55 bis 70 Gew.-%, bevorzugt 60 bis 65 Gew.-%, besonders bevorzugt 63 bis 65 Gew.-%.

Erfindungsgemäß hat es sich des Weiteren als vorteilhaft herausgestellt, dass die Zusammensetzung kein Kaliumwasserglas enthält. Kaliumwassergläser haben sich im Allgemeinen oftmals als schlechter aushärtend dargestellt und weisen eine längere Dauer bis zur vollständigen Durchtrocknung auf.

Wie bereits ausgeführt, ist es ein Vorteil der vorliegenden Erfindung, dass der Anteil an organischen Bestandteilen in der Zusammensetzung möglichst niedrig eingestellt werden kann. Daher ist der Anteil an organischen Bestandteilen in der erfindungsgemäßen Zusammensetzung vorzugsweise höchstens 15 %, bevorzugt höchstens 10 %, weiter bevorzugt höchstens 9 %, weiter bevorzugt höchstens 8 %, jeweils bezogen auf das Gesamtgewicht der Zusammensetzung.

Durch das Inkontaktbringen der Komponenten der erfindungsgemäßen Zusammensetzung kommt es zu einer Schaumbildung. Die Volumenzunahme von Flüssigkeit zu Schaum beim Inkontaktbringen der Bestandteile beläuft sich vorzugsweise auf den Faktor 1,5 bis 25, bevorzugt 2 bis 22, weiter bevorzugt, 2,5 bis 20, weiter bevorzugt, 2,5 bis 19, weiter bevorzugt, 2,5 bis 18. Hierdurch lässt sich aus einer verhältnismäßig geringen Volumenmenge der erfindungsgemäßen Zusammensetzung eine große Menge an Schaum bereitstellen.

Die erfindungsgemäße Zusammensetzung ist insbesondere durch eine der nachfolgenden Kombinationen aus organischer Verbindung und Oxidationsmittel, jeweils in Kombination mit einem Wasserglas, und gegebenenfalls in Kombination mit einem Katalysator gekennzeichnet:

| Kombination | Organische Verbindung | Oxidationsmittel | Katalysator |
|---|---|---|---|
| 1 | Oxalsäure | Wasserstoffperoxid | kein |
| 2 | Oxalsäure | Natriumhypochlorit | kein |
| 3 | Oxalsäure | Hypochlorige Säure | kein |
| 4 | Oxalsäure | Kaliumpermanganat | kein |
| 5 | Oxalsäure | Persulfate | kein |
| 6 | Oxalsäure | Wasserstoffperoxid | kein |
| 7 | Oxalsäure | Natriumhypochlorit | kein |
| 8 | Oxalsäure | Hypochlorige Säure | kein |
| 9 | Oxalsäure | Kaliumpermanganat | kein |
| 10 | Oxalsäure | Persulfate | kein |
| 11 | Oxalsäure | Wasserstoffperoxid | kein |
| 12 | Oxalsäure | Natriumhypochlorit | kein |
| 13 | Oxalsäure | Hypochlorige Säure | kein |
| 14 | Oxalsäure | Kaliumpermanganat | kein |
| 15 | Oxalsäure | Persulfate | kein |
| 16 | Oxalsäure | Wasserstoffperoxid | kein |
| 17 | Oxalsäure | Natriumhypochlorit | kein |
| 18 | Oxalsäure | Hypochlorige Säure | kein |
| 19 | Oxalsäure | Kaliumpermanganat | kein |
| 20 | Oxalsäure | Persulfate | kein |
| 21 | Oxalsäure | Wasserstoffperoxid | kein |
| 22 | Oxalsäure | Natriumhypochlorit | kein |
| 23 | Oxalsäure | Hypochlorige Säure | kein |
| 24 | Oxalsäure | Kaliumpermanganat | kein |
| 25 | Oxalsäure | Persulfate | kein |
| 26 | Oxalsäure | Wasserstoffperoxid | kein |
| 27 | Oxalsäure | Natriumhypochlorit | kein |
| 28 | Oxalsäure | Hypochlorige Säure | kein |
| 29 | Oxalsäure | Kaliumpermanganat | kein |
| 30 | Oxalsäure | Persulfate | kein |
| 31 | Weinsäure | Wasserstoffperoxid | kein |
| 32 | Weinsäure | Natriumhypochlorit | kein |
| 33 | Weinsäure | Hypochlorige Säure | kein |
| 34 | Weinsäure | Kaliumpermanganat | kein |
| 35 | Weinsäure | Persulfate | kein |
| 36 | Weinsäure | Wasserstoffperoxid | kein |
| 37 | Weinsäure | Natriumhypochlorit | kein |
| 38 | Weinsäure | Hypochlorige Säure | kein |
| 39 | Weinsäure | Kaliumpermanganat | kein |
| 40 | Weinsäure | Persulfate | kein |
| 41 | Weinsäure | Wasserstoffperoxid | kein |
| 42 | Weinsäure | Natriumhypochlorit | kein |
| 43 | Weinsäure | Hypochlorige Säure | kein |
| 44 | Weinsäure | Kaliumpermanganat | kein |
| 45 | Weinsäure | Persulfate | kein |
| 46 | Weinsäure | Wasserstoffperoxid | kein |
| 47 | Weinsäure | Natriumhypochlorit | kein |
| 48 | Weinsäure | Hypochlorige Säure | kein |
| 49 | Weinsäure | Kaliumpermanganat | kein |
| 50 | Weinsäure | Persulfate | kein |
| 51 | Weinsäure | Wasserstoffperoxid | kein |
| 52 | Weinsäure | Natriumhypochlorit | kein |
| 53 | Weinsäure | Hypochlorige Säure | kein |
| 54 | Weinsäure | Kaliumpermanganat | kein |
| 55 | Weinsäure | Persulfate | kein |
| 56 | Weinsäure | Wasserstoffperoxid | kein |
| 57 | Weinsäure | Natriumhypochlorit | kein |
| 58 | Weinsäure | Hypochlorige Säure | kein |
| 59 | Weinsäure | Kaliumpermanganat | kein |
| 60 | Weinsäure | Persulfate | kein |
| 61 | Dioxobernsteinsäure | Wasserstoffperoxid | kein |
| 62 | Dioxobernsteinsäure | Natriumhypochlorit | kein |
| 63 | Dioxobernsteinsäure | Hypochlorige Säure | kein |
| 64 | Dioxobernsteinsäure | Kaliumpermanganat | kein |
| 65 | Dioxobernsteinsäure | Persulfate | kein |
| 66 | Dioxobernsteinsäure | Wasserstoffperoxid | kein |
| 67 | Dioxobernsteinsäure | Natriumhypochlorit | kein |
| 68 | Dioxobernsteinsäure | Hypochlorige Säure | kein |
| 69 | Dioxobernsteinsäure | Kaliumpermanganat | kein |
| 70 | Dioxobernsteinsäure | Persulfate | kein |
| 71 | Dioxobernsteinsäure | Wasserstoffperoxid | kein |
| 72 | Dioxobernsteinsäure | Natriumhypochlorit | kein |
| 73 | Dioxobernsteinsäure | Hypochlorige Säure | kein |
| 74 | Dioxobernsteinsäure | Kaliumpermanganat | kein |
| 75 | Dioxobernsteinsäure | Persulfate | kein |
| 76 | Dioxobernsteinsäure | Wasserstoffperoxid | kein |
| 77 | Dioxobernsteinsäure | Natriumhypochlorit | kein |
| 78 | Dioxobernsteinsäure | Hypochlorige Säure | kein |
| 79 | Dioxobernsteinsäure | Kaliumpermanganat | kein |
| 80 | Dioxobernsteinsäure | Persulfate | kein |
| 81 | Dioxobernsteinsäure | Wasserstoffperoxid | kein |
| 82 | Dioxobernsteinsäure | Natriumhypochlorit | kein |
| 83 | Dioxobernsteinsäure | Hypochlorige Säure | kein |
| 84 | Dioxobernsteinsäure | Kaliumpermanganat | kein |
| 85 | Dioxobernsteinsäure | Persulfate | kein |
| 86 | Dioxobernsteinsäure | Wasserstoffperoxid | kein |
| 87 | Dioxobernsteinsäure | Natriumhypochlorit | kein |
| 88 | Dioxobernsteinsäure | Hypochlorige Säure | kein |
| 89 | Dioxobernsteinsäure | Kaliumpermanganat | kein |
| 90 | Dioxobernsteinsäure | Persulfate | kein |
| 91 | Mesoxalsäure | Wasserstoffperoxid | kein |
| 92 | Mesoxalsäure | Natriumhypochlorit | kein |
| 93 | Mesoxalsäure | Hypochlorige Säure | kein |
| 94 | Mesoxalsäure | Kaliumpermanganat | kein |
| 95 | Mesoxalsäure | Persulfate | kein |
| 96 | Mesoxalsäure | Wasserstoffperoxid | kein |
| 97 | Mesoxalsäure | Natriumhypochlorit | kein |
| 98 | Mesoxalsäure | Hypochlorige Säure | kein |
| 99 | Mesoxalsäure | Kaliumpermanganat | kein |
| 100 | Mesoxalsäure | Persulfate | kein |
| 101 | Mesoxalsäure | Wasserstoffperoxid | kein |
| 102 | Mesoxalsäure | Natriumhypochlorit | kein |
| 103 | Mesoxalsäure | Hypochlorige Säure | kein |
| 104 | Mesoxalsäure | Kaliumpermanganat | kein |
| 105 | Mesoxalsäure | Persulfate | kein |
| 106 | Mesoxalsäure | Wasserstoffperoxid | kein |
| 107 | Mesoxalsäure | Natriumhypochlorit | kein |
| 108 | Mesoxalsäure | Hypochlorige Säure | kein |
| 109 | Mesoxalsäure | Kaliumpermanganat | kein |
| 110 | Mesoxalsäure | Persulfate | kein |
| 111 | Mesoxalsäure | Wasserstoffperoxid | kein |
| 112 | Mesoxalsäure | Natriumhypochlorit | kein |
| 113 | Mesoxalsäure | Hypochlorige Säure | kein |
| 114 | Mesoxalsäure | Kaliumpermanganat | kein |
| 115 | Mesoxalsäure | Persulfate | kein |
| 116 | Mesoxalsäure | Wasserstoffperoxid | kein |
| 117 | Mesoxalsäure | Natriumhypochlorit | kein |
| 118 | Mesoxalsäure | Hypochlorige Säure | kein |
| 119 | Mesoxalsäure | Kaliumpermanganat | kein |
| 120 | Mesoxalsäure | Persulfate | kein |
| 121 | Bernsteinsäure | Wasserstoffperoxid | kein |
| a122 | Bernsteinsäure | Natriumhypochlorit | kein |
| 123 | Bernsteinsäure | Hypochlorige Säure | kein |
| 124 | Bernsteinsäure | Kaliumpermanganat | kein |
| 125 | Bernsteinsäure | Persulfate | kein |
| 126 | Bernsteinsäure | Wasserstoffperoxid | kein |
| 127 | Bernsteinsäure | Natriumhypochlorit | kein |
| 128 | Bernsteinsäure | Hypochlorige Säure | kein |
| 129 | Bernsteinsäure | Kaliumpermanganat | kein |
| 130 | Bernsteinsäure | Persulfate | kein |
| 131 | Bernsteinsäure | Wasserstoffperoxid | kein |
| 132 | Bernsteinsäure | Natriumhypochlorit | kein |
| 133 | Bernsteinsäure | Hypochlorige Säure | kein |
| 134 | Bernsteinsäure | Kaliumpermanganat | kein |
| 135 | Bernsteinsäure | Persulfate | kein |
| 136 | Bernsteinsäure | Wasserstoffperoxid | kein |
| 137 | Bernsteinsäure | Natriumhypochlorit | kein |
| 138 | Bernsteinsäure | Hypochlorige Säure | kein |
| 139 | Bernsteinsäure | Kaliumpermanganat | kein |
| 140 | Bernsteinsäure | Persulfate | kein |
| 141 | Bernsteinsäure | Wasserstoffperoxid | kein |
| 142 | Bernsteinsäure | Natriumhypochlorit | kein |
| 143 | Bernsteinsäure | Hypochlorige Säure | kein |
| 144 | Bernsteinsäure | Kaliumpermanganat | kein |
| 145 | Bernsteinsäure | Persulfate | kein |
| 146 | Bernsteinsäure | Wasserstoffperoxid | kein |
| 147 | Bernsteinsäure | Natriumhypochlorit | kein |
| 148 | Bernsteinsäure | Hypochlorige Säure | kein |
| 149 | Bernsteinsäure | Kaliumpermanganat | kein |
| 150 | Bernsteinsäure | Persulfate | kein |
| 151 | Tartronsäure | Wasserstoffperoxid | kein |
| 152 | Tartronsäure | Natriumhypochlorit | kein |
| 153 | Tartronsäure | Hypochlorige Säure | kein |
| 154 | Tartronsäure | Kaliumpermanganat | kein |
| 155 | Tartronsäure | Persulfate | kein |
| 156 | Tartronsäure | Wasserstoffperoxid | kein |
| 157 | Tartronsäure | Natriumhypochlorit | kein |
| 158 | Tartronsäure | Hypochlorige Säure | kein |
| 159 | Tartronsäure | Kaliumpermanganat | kein |
| 160 | Tartronsäure | Persulfate | kein |
| 161 | Tartronsäure | Wasserstoffperoxid | kein |
| 162 | Tartronsäure | Natriumhypochlorit | kein |
| 163 | Tartronsäure | Hypochlorige Säure | kein |
| 164 | Tartronsäure | Kaliumpermanganat | kein |
| 165 | Tartronsäure | Persulfate | kein |
| 166 | Tartronsäure | Wasserstoffperoxid | kein |
| 167 | Tartronsäure | Natriumhypochlorit | kein |
| 168 | Tartronsäure | Hypochlorige Säure | kein |
| 169 | Tartronsäure | Kaliumpermanganat | kein |
| 170 | Tartronsäure | Persulfate | kein |
| 171 | Tartronsäure | Wasserstoffperoxid | kein |
| 172 | Tartronsäure | Natriumhypochlorit | kein |
| 173 | Tartronsäure | Hypochlorige Säure | kein |
| 174 | Tartronsäure | Kaliumpermanganat | kein |
| 175 | Tartronsäure | Persulfate | kein |
| 176 | Tartronsäure | Wasserstoffperoxid | kein |
| 177 | Tartronsäure | Natriumhypochlorit | kein |
| 178 | Tartronsäure | Hypochlorige Säure | kein |
| 179 | Tartronsäure | Kaliumpermanganat | kein |
| 180 | Tartronsäure | Persulfate | kein |
| 181 | Zitronensäure | Wasserstoffperoxid | kein |
| 182 | Zitronensäure | Natriumhypochlorit | kein |
| 183 | Zitronensäure | Hypochlorige Säure | kein |
| 184 | Zitronensäure | Kaliumpermanganat | kein |
| 185 | Zitronensäure | Persulfate | kein |
| 186 | Zitronensäure | Wasserstoffperoxid | kein |
| 187 | Zitronensäure | Natriumhypochlorit | kein |
| 188 | Zitronensäure | Hypochlorige Säure | kein |
| 189 | Zitronensäure | Kaliumpermanganat | kein |
| 190 | Zitronensäure | Persulfate | kein |
| 191 | Zitronensäure | Wasserstoffperoxid | kein |
| 192 | Zitronensäure | Natriumhypochlorit | kein |
| 193 | Zitronensäure | Hypochlorige Säure | kein |
| 194 | Zitronensäure | Kaliumpermanganat | kein |
| 195 | Zitronensäure | Persulfate | kein |
| 196 | Zitronensäure | Wasserstoffperoxid | kein |
| 197 | Zitronensäure | Natriumhypochlorit | kein |
| 198 | Zitronensäure | Hypochlorige Säure | kein |
| 199 | Zitronensäure | Kaliumpermanganat | kein |
| 200 | Zitronensäure | Persulfate | kein |
| 201 | Zitronensäure | Wasserstoffperoxid | kein |
| 202 | Zitronensäure | Natriumhypochlorit | kein |
| 203 | Zitronensäure | Hypochlorige Säure | kein |
| 204 | Zitronensäure | Kaliumpermanganat | kein |
| 205 | Zitronensäure | Persulfate | kein |
| 206 | Zitronensäure | Wasserstoffperoxid | kein |
| 207 | Zitronensäure | Natriumhypochlorit | kein |
| 208 | Zitronensäure | Hypochlorige Säure | kein |
| 209 | Zitronensäure | Kaliumpermanganat | kein |
| 210 | Zitronensäure | Persulfate | kein |
| 211 | Oxalsäure | Wasserstoffperoxid | Eisen(II) |
| 212 | Oxalsäure | Natriumhypochlorit | Eisen(II) |
| 213 | Oxalsäure | Hypochlorige Säure | Eisen(II) |
| 214 | Oxalsäure | Kaliumpermanganat | Eisen(II) |
| 215 | Oxalsäure | Persulfate | Eisen(II) |
| 216 | Oxalsäure | Wasserstoffperoxid | Eisen(III) |
| 217 | Oxalsäure | Natriumhypochlorit | Eisen(III) |
| 218 | Oxalsäure | Hypochlorige Säure | Eisen(III) |
| 219 | Oxalsäure | Kaliumpermanganat | Eisen(III) |
| 220 | Oxalsäure | Persulfate | Eisen(III) |
| 221 | Oxalsäure | Wasserstoffperoxid | Kupfer(II) |
| 222 | Oxalsäure | Natriumhypochlorit | Kupfer(II) |
| 223 | Oxalsäure | Hypochlorige Säure | Kupfer(II) |
| 224 | Oxalsäure | Kaliumpermanganat | Kupfer(II) |
| 225 | Oxalsäure | Persulfate | Kupfer(II) |
| 226 | Oxalsäure | Wasserstoffperoxid | Mangan(II) |
| 227 | Oxalsäure | Natriumhypochlorit | Mangan(II) |
| 228 | Oxalsäure | Hypochlorige Säure | Mangan(II) |
| 229 | Oxalsäure | Kaliumpermanganat | Mangan(II) |
| 230 | Oxalsäure | Persulfate | Mangan(II) |
| 231 | Oxalsäure | Wasserstoffperoxid | Mangan(IV) |
| 232 | Oxalsäure | Natriumhypochlorit | Mangan(IV) |
| 233 | Oxalsäure | Hypochlorige Säure | Mangan(IV) |
| 234 | Oxalsäure | Kaliumpermanganat | Mangan(IV) |
| 235 | Oxalsäure | Persulfate | Mangan(IV) |
| 236 | Oxalsäure | Wasserstoffperoxid | Wolframate |
| 237 | Oxalsäure | Natriumhypochlorit | Wolframate |
| 238 | Oxalsäure | Hypochlorige Säure | Wolframate |
| 239 | Oxalsäure | Kaliumpermanganat | Wolframate |
| 240 | Oxalsäure | Persulfate | Wolframate |
| 241 | Weinsäure | Wasserstoffperoxid | Eisen(II) |
| 242 | Weinsäure | Natriumhypochlorit | Eisen(II) |
| 243 | Weinsäure | Hypochlorige Säure | Eisen(II) |
| 244 | Weinsäure | Kaliumpermanganat | Eisen(II) |
| 245 | Weinsäure | Persulfate | Eisen(II) |
| 246 | Weinsäure | Wasserstoffperoxid | Eisen(III) |
| 247 | Weinsäure | Natriumhypochlorit | Eisen(III) |
| 248 | Weinsäure | Hypochlorige Säure | Eisen(III) |
| 249 | Weinsäure | Kaliumpermanganat | Eisen(III) |
| 250 | Weinsäure | Persulfate | Eisen(III) |
| 251 | Weinsäure | Wasserstoffperoxid | Kupfer(II) |
| 252 | Weinsäure | Natriumhypochlorit | Kupfer(II) |
| 253 | Weinsäure | Hypochlorige Säure | Kupfer(II) |
| 254 | Weinsäure | Kaliumpermanganat | Kupfer(II) |
| 255 | Weinsäure | Persulfate | Kupfer(II) |
| 256 | Weinsäure | Wasserstoffperoxid | Mangan(II) |
| 257 | Weinsäure | Natriumhypochlorit | Mangan(II) |
| 258 | Weinsäure | Hypochlorige Säure | Mangan(II) |
| 259 | Weinsäure | Kaliumpermanganat | Mangan(II) |
| 260 | Weinsäure | Persulfate | Mangan(II) |
| 261 | Weinsäure | Wasserstoffperoxid | Mangan(IV) |
| 262 | Weinsäure | Natriumhypochlorit | Mangan(IV) |
| 263 | Weinsäure | Hypochlorige Säure | Mangan(IV) |
| 264 | Weinsäure | Kaliumpermanganat | Mangan(IV) |
| 265 | Weinsäure | Persulfate | Mangan(IV) |
| 266 | Weinsäure | Wasserstoffperoxid | Wolframate |
| 267 | Weinsäure | Natriumhypochlorit | Wolframate |
| 268 | Weinsäure | Hypochlorige Säure | Wolframate |
| 269 | Weinsäure | Kaliumpermanganat | Wolframate |
| 270 | Weinsäure | Persulfate | Wolframate |
| 271 | Dioxobernsteinsäure | Wasserstoffperoxid | Eisen(II) |
| 272 | Dioxobernsteinsäure | Natriumhypochlorit | Eisen(II) |
| 273 | Dioxobernsteinsäure | Hypochlorige Säure | Eisen(II) |
| 274 | Dioxobernsteinsäure | Kaliumpermanganat | Eisen(II) |
| 275 | Dioxobernsteinsäure | Persulfate | Eisen(II) |
| 276 | Dioxobernsteinsäure | Wasserstoffperoxid | Eisen(III) |
| 277 | Dioxobernsteinsäure | Natriumhypochlorit | Eisen(III) |
| 278 | Dioxobernsteinsäure | Hypochlorige Säure | Eisen(III) |
| 279 | Dioxobernsteinsäure | Kaliumpermanganat | Eisen(III) |
| 280 | Dioxobernsteinsäure | Persulfate | Eisen(III) |
| 281 | Dioxobernsteinsäure | Wasserstoffperoxid | Kupfer(II) |
| 282 | Dioxobernsteinsäure | Natriumhypochlorit | Kupfer(II) |
| 283 | Dioxobernsteinsäure | Hypochlorige Säure | Kupfer(II) |
| 284 | Dioxobernsteinsäure | Kaliumpermanganat | Kupfer(II) |
| 285 | Dioxobernsteinsäure | Persulfate | Kupfer(II) |
| 286 | Dioxobernsteinsäure | Wasserstoffperoxid | Mangan(II) |
| 287 | Dioxobernsteinsäure | Natriumhypochlorit | Mangan(II) |
| 288 | Dioxobernsteinsäure | Hypochlorige Säure | Mangan(II) |
| 289 | Dioxobernsteinsäure | Kaliumpermanganat | Mangan(II) |
| 290 | Dioxobernsteinsäure | Persulfate | Mangan(II) |
| 291 | Dioxobernsteinsäure | Wasserstoffperoxid | Mangan(IV) |
| 292 | Dioxobernsteinsäure | Natriumhypochlorit | Mangan(IV) |
| 293 | Dioxobernsteinsäure | Hypochlorige Säure | Mangan(IV) |
| 294 | Dioxobernsteinsäure | Kaliumpermanganat | Mangan(IV) |
| 295 | Dioxobernsteinsäure | Persulfate | Mangan(IV) |
| 296 | Dioxobernsteinsäure | Wasserstoffperoxid | Wolframate |
| 297 | Dioxobernsteinsäure | Natriumhypochlorit | Wolframate |
| 298 | Dioxobernsteinsäure | Hypochlorige Säure | Wolframate |
| 299 | Dioxobernsteinsäure | Kaliumpermanganat | Wolframate |
| 300 | Dioxobernsteinsäure | Persulfate | Wolframate |
| 301 | Mesoxalsäure | Wasserstoffperoxid | Eisen(II) |
| 302 | Mesoxalsäure | Natriumhypochlorit | Eisen(II) |
| 303 | Mesoxalsäure | Hypochlorige Säure | Eisen(II) |
| 304 | Mesoxalsäure | Kaliumpermanganat | Eisen(II) |
| 305 | Mesoxalsäure | Persulfate | Eisen(II) |
| 306 | Mesoxalsäure | Wasserstoffperoxid | Eisen(III) |
| 307 | Mesoxalsäure | Natriumhypochlorit | Eisen(III) |
| 308 | Mesoxalsäure | Hypochlorige Säure | Eisen(III) |
| 309 | Mesoxalsäure | Kaliumpermanganat | Eisen(III) |
| 310 | Mesoxalsäure | Persulfate | Eisen(III) |
| 311 | Mesoxalsäure | Wasserstoffperoxid | Kupfer(II) |
| 312 | Mesoxalsäure | Natriumhypochlorit | Kupfer(II) |
| 313 | Mesoxalsäure | Hypochlorige Säure | Kupfer(II) |
| 314 | Mesoxalsäure | Kaliumpermanganat | Kupfer(II) |
| 315 | Mesoxalsäure | Persulfate | Kupfer(II) |
| 316 | Mesoxalsäure | Wasserstoffperoxid | Mangan(II) |
| 317 | Mesoxalsäure | Natriumhypochlorit | Mangan(II) |
| 318 | Mesoxalsäure | Hypochlorige Säure | Mangan(II) |
| 319 | Mesoxalsäure | Kaliumpermanganat | Mangan(II) |
| 320 | Mesoxalsäure | Persulfate | Mangan(II) |
| 321 | Mesoxalsäure | Wasserstoffperoxid | Mangan(IV) |
| 322 | Mesoxalsäure | Natriumhypochlorit | Mangan(IV) |
| 323 | Mesoxalsäure | Hypochlorige Säure | Mangan(IV) |
| 324 | Mesoxalsäure | Kaliumpermanganat | Mangan(IV) |
| 325 | Mesoxalsäure | Persulfate | Mangan(IV) |
| 326 | Mesoxalsäure | Wasserstoffperoxid | Wolframate |
| 327 | Mesoxalsäure | Natriumhypochlorit | Wolframate |
| 328 | Mesoxalsäure | Hypochlorige Säure | Wolframate |
| 329 | Mesoxalsäure | Kaliumpermanganat | Wolframate |
| 330 | Mesoxalsäure | Persulfate | Wolframate |
| 331 | Bernsteinsäure | Wasserstoffperoxid | Eisen(II) |
| 332 | Bernsteinsäure | Natriumhypochlorit | Eisen(II) |
| 333 | Bernsteinsäure | Hypochlorige Säure | Eisen(II) |
| 334 | Bernsteinsäure | Kaliumpermanganat | Eisen(II) |
| 335 | Bernsteinsäure | Persulfate | Eisen(II) |
| 336 | Bernsteinsäure | Wasserstoffperoxid | Eisen(III) |
| 337 | Bernsteinsäure | Natriumhypochlorit | Eisen(III) |
| 338 | Bernsteinsäure | Hypochlorige Säure | Eisen(III) |
| 339 | Bernsteinsäure | Kaliumpermanganat | Eisen(III) |
| 340 | Bernsteinsäure | Persulfate | Eisen(III) |
| 341 | Bernsteinsäure | Wasserstoffperoxid | Kupfer(II) |
| 342 | Bernsteinsäure | Natriumhypochlorit | Kupfer(II) |
| 343 | Bernsteinsäure | Hypochlorige Säure | Kupfer(II) |
| 344 | Bernsteinsäure | Kaliumpermanganat | Kupfer(II) |
| 345 | Bernsteinsäure | Persulfate | Kupfer(II) |
| 346 | Bernsteinsäure | Wasserstoffperoxid | Mangan(II) |
| 347 | Bernsteinsäure | Natriumhypochlorit | Mangan(II) |
| 348 | Bernsteinsäure | Hypochlorige Säure | Mangan(II) |
| 349 | Bernsteinsäure | Kaliumpermanganat | Mangan(II) |
| 350 | Bernsteinsäure | Persulfate | Mangan(II) |
| 351 | Bernsteinsäure | Wasserstoffperoxid | Mangan(IV) |
| 352 | Bernsteinsäure | Natriumhypochlorit | Mangan(IV) |
| 353 | Bernsteinsäure | Hypochlorige Säure | Mangan(IV) |
| 354 | Bernsteinsäure | Kaliumpermanganat | Mangan(IV) |
| 355 | Bernsteinsäure | Persulfate | Mangan(IV) |
| 356 | Bernsteinsäure | Wasserstoffperoxid | Wolframate |
| 357 | Bernsteinsäure | Natriumhypochlorit | Wolframate |
| 358 | Bernsteinsäure | Hypochlorige Säure | Wolframate |
| 359 | Bernsteinsäure | Kaliumpermanganat | Wolframate |
| 360 | Bernsteinsäure | Persulfate | Wolframate |
| 361 | Tartronsäure | Wasserstoffperoxid | Eisen(II) |
| 362 | Tartronsäure | Natriumhypochlorit | Eisen(II) |
| 363 | Tartronsäure | Hypochlorige Säure | Eisen(II) |
| 364 | Tartronsäure | Kaliumpermanganat | Eisen(II) |
| 365 | Tartronsäure | Persulfate | Eisen(II) |
| 366 | Tartronsäure | Wasserstoffperoxid | Eisen(III) |
| 367 | Tartronsäure | Natriumhypochlorit | Eisen(III) |
| 368 | Tartronsäure | Hypochlorige Säure | Eisen(III) |
| 369 | Tartronsäure | Kaliumpermanganat | Eisen(III) |
| 370 | Tartronsäure | Persulfate | Eisen(III) |
| 371 | Tartronsäure | Wasserstoffperoxid | Kupfer(II) |
| 372 | Tartronsäure | Natriumhypochlorit | Kupfer(II) |
| 373 | Tartronsäure | Hypochlorige Säure | Kupfer(II) |
| 374 | Tartronsäure | Kaliumpermanganat | Kupfer(II) |
| 375 | Tartronsäure | Persulfate | Kupfer(II) |
| 376 | Tartronsäure | Wasserstoffperoxid | Mangan(II) |
| 377 | Tartronsäure | Natriumhypochlorit | Mangan(II) |
| 378 | Tartronsäure | Hypochlorige Säure | Mangan(II) |
| 379 | Tartronsäure | Kaliumpermanganat | Mangan(II) |
| 380 | Tartronsäure | Persulfate | Mangan(II) |
| 381 | Tartronsäure | Wasserstoffperoxid | Mangan(IV) |
| 382 | Tartronsäure | Natriumhypochlorit | Mangan(IV) |
| 383 | Tartronsäure | Hypochlorige Säure | Mangan(IV) |
| 384 | Tartronsäure | Kaliumpermanganat | Mangan(IV) |
| 385 | Tartronsäure | Persulfate | Mangan(IV) |
| 386 | Tartronsäure | Wasserstoffperoxid | Wolframate |
| 387 | Tartronsäure | Natriumhypochlorit | Wolframate |
| 388 | Tartronsäure | Hypochlorige Säure | Wolframate |
| 389 | Tartronsäure | Kaliumpermanganat | Wolframate |
| 390 | Tartronsäure | Persulfate | Wolframate |
| 391 | Zitronensäure | Wasserstoffperoxid | Eisen(II) |
| 392 | Zitronensäure | Natriumhypochlorit | Eisen(II) |
| 393 | Zitronensäure | Hypochlorige Säure | Eisen(II) |
| 394 | Zitronensäure | Kaliumpermanganat | Eisen(II) |
| 395 | Zitronensäure | Persulfate | Eisen(II) |
| 396 | Zitronensäure | Wasserstoffperoxid | Eisen(III) |
| 397 | Zitronensäure | Natriumhypochlorit | Eisen(III) |
| 398 | Zitronensäure | Hypochlorige Säure | Eisen(III) |
| 399 | Zitronensäure | Kaliumpermanganat | Eisen(III) |
| 400 | Zitronensäure | Persulfate | Eisen(III) |
| 401 | Zitronensäure | Wasserstoffperoxid | Kupfer(II) |
| 402 | Zitronensäure | Natriumhypochlorit | Kupfer(II) |
| 403 | Zitronensäure | Hypochlorige Säure | Kupfer(II) |
| 404 | Zitronensäure | Kaliumpermanganat | Kupfer(II) |
| 405 | Zitronensäure | Persulfate | Kupfer(II) |
| 406 | Zitronensäure | Wasserstoffperoxid | Mangan(II) |
| 407 | Zitronensäure | Natriumhypochlorit | Mangan(II) |
| 408 | Zitronensäure | Hypochlorige Säure | Mangan(II) |
| 409 | Zitronensäure | Kaliumpermanganat | Mangan(ll) |
| 410 | Zitronensäure | Persulfate | Mangan(ll) |
| 411 | Zitronensäure | Wasserstoffperoxid | Mangan(IV) |
| 412 | Zitronensäure | Natriumhypochlorit | Mangan(IV) |
| 413 | Zitronensäure | Hypochlorige Säure | Mangan(IV) |
| 414 | Zitronensäure | Kaliumpermanganat | Mangan(IV) |
| 415 | Zitronensäure | Persulfate | Mangan(IV) |
| 416 | Zitronensäure | Wasserstoffperoxid | Wolframate |
| 417 | Zitronensäure | Natriumhypochlorit | Wolframate |
| 418 | Zitronensäure | Hypochlorige Säure | Wolframate |
| 419 | Zitronensäure | Kaliumpermanganat | Wolframate |
| 420 | Zitronensäure | Persulfate | Wolframate |

Durch die Reaktion der organischen Verbindung mit dem Oxidationsmittel entsteht mindestens ein Treibgas. Dabei wird vorzugsweise ein Treibgas freigesetzt, welches die Aushärtung des Wasserglases fördert, beispielsweise CO₂. Fördern bedeutet hierbei, dass die Kristallisationsgeschwindigkeit (oder Aushärtegeschwindigkeit) des Wasserglases zeitlich gefördert wird, sodass die Aushärtung/Kristallisation durch Anwesenheit des Treibgases schneller voranschreitet als es bei dessen Abwesenheit des Gases der Fall wäre.

Die erfindungsgemäße Zusammensetzung weist vorzugsweise einen Wassergehalt von 15 bis 65 %, bevorzugt 20 bis 55 %, besonders bevorzugt 25 bis 50 %, jeweils bezogen auf die Gesamtmasse der Zusammensetzung, auf.

Die vorliegende Erfindung betrifft des Weiteren ein Verfahren zur Herstellung einer erfindungsgemäßen Zusammensetzung. Das Verfahren ist dadurch gekennzeichnet, dass man
(1) eine erste Komponente, umfassend eine organische Verbindung, welche durch Oxidation mindestens ein Treibgas freisetzt;
(2) eine zweite Komponente, umfassend ein Oxidationsmittel zum Freisetzen des mindestens einen Treibgases durch chemische Reaktion aus der organischen Verbindung,
(3) eine dritte Komponente, umfassend mindestens ein Wasserglas,
bereitstellt und entweder
(a) die erste Komponente und die dritte Komponente miteinander vermischt und die zweite Komponente getrennt von der ersten und dritten Komponente vorhält, oder
(b) die erste und die zweite Komponente miteinander vermischt und die dritte Komponente getrennt von der ersten und zweiten Komponente vorhält, oder
(c) die zweite und die dritte Komponente miteinander vermischt und die erste Komponente getrennt von der zweiten und dritten Komponente vorhält.

Das erfindungsgemäße Verfahren ist ferner in einer bevorzugten Ausgestaltung dadurch gekennzeichnet, dass man entweder
(a) die erste Komponente und die dritte Komponente miteinander vermischt und in ein erstes Kompartment einer Kartusche einführt und die zweite Komponente in ein zweites Kompartment der Kartusche einführt, oder
(b) die erste Komponente und die zweite Komponente miteinander vermischt und in ein erstes Kompartment einer Kartusche einführt und die dritte Komponente in ein zweites Kompartment der Kartusche getrennt von der ersten und zweiten Komponente einführt, oder
(c) die zweite Komponente und die dritte Komponente miteinander vermischt und in ein erstes Kompartment einer Kartusche einführt und die erste Komponente in ein zweites Kompartment der Kartusche getrennt von der ersten und zweiten Komponente einführt,

Eine Zweikomponenten-Kartusche ist ein innovatives Verpackungssystem, das speziell für Produkte entwickelt wurde, die aus zwei separaten Komponenten bestehen, die bei der Anwendung miteinander reagieren und aushärten. Diese Art von Kartusche wird häufig in der Bau- und Reparaturindustrie, in der Automobilbranche sowie in der Kunst- und Handwerkswelt eingesetzt.

Die Kartusche besteht in der Regel aus robustem Kunststoff, der eine sichere Lagerung und Handhabung der beiden Komponenten gewährleistet. Die Kartusche ist in zwei Kompartments unterteilt, die jeweils eine der Komponenten enthalten. Die beiden Kompartments sind vorzugsweise koaxial angeordnet.

Bei der Anwendung wird die Kartusche in eine geeignete Kartuschenpistole eingesetzt. Durch Drücken des Abzugs wird ein bestimmter Druck auf die Kartusche ausgeübt, wodurch beide Komponenten gleichzeitig durch die Mischdüse gepresst werden. Sobald die Komponenten gemischt sind, beginnt eine chemische Reaktion des Oxidationsmittels mit der organischen Verbindung, durch welche das Gas freigesetzt wird, welches die Aushärtung begünstigt.

Die Kartusche ermöglicht eine exakte Dosierung der beiden Komponenten, was zu einer konsistenten Qualität des Endprodukts führt.

Da die Komponenten getrennt gelagert werden, bleibt die Haltbarkeit der Materialien länger erhalten, ohne dass sie vorzeitig reagieren.

Die Verwendung einer Kartuschenpistole macht die Anwendung einfach und sauber, ohne dass zusätzliche Mischwerkzeuge verwendet werden müssen.

Die Mischung der zwei Komponenten in der Zweikomponenten-Kartusche erfolgt durch einen speziellen Mischmechanismus, der in der Mischdüse integriert ist. Die Mischdüse ist ein entscheidendes Element, das dafür sorgt, dass die beiden Komponenten in einem bestimmten Verhältnis gemischt werden. In der Düse gibt es spezielle Strömungswege oder Mischelemente, die eine gründliche Vermischung der beiden Komponenten gewährleisten.

Durch diesen Prozess wird sichergestellt, dass die beiden Komponenten optimal miteinander reagieren, was zu einer hohen Qualität und Festigkeit des Endprodukts führt. Ein Kompartment einer Kartusche bezieht sich in der Regel auf einen abgetrennten Bereich oder Abschnitt innerhalb einer Kartusche, in dem bestimmte Materialien oder Substanzen getrennt von anderen aufbewahrt werden.

Aus dem erfindungsgemäßen Verfahren kann daher eine Kartusche resultieren, in welchem die erfindungsgemäße Zusammensetzung vorliegt.

Daher betrifft die vorliegende Erfindung auch eine Kartusche, umfassend mindestens zwei Kompartments, wobei
(a) das erste Kompartment die erste und dritte Komponente der Zusammensetzung und das zweite Kompartment die zweite Komponente aufweist, oder
(b) das erste Kompartment die erste und zweite Komponente der Zusammensetzung und das zweite Kompartment die dritte Komponente aufweist, oder
(c) das erste Kompartment die zweite und dritte Komponente der Zusammensetzung und das zweite Kompartment die erste Komponente aufweist.

Die erfindungsgemäße Zusammensetzung oder die erfindungsgemäße Kartusche können zur Bereitstellung eines Bauschaum oder eines Brandschutzschaum verwendet werden.

Insbesondere können die erfindungsgemäße Zusammensetzung oder die erfindungsgemäße Kartusche zur Herstellung von Brandschutzmaterialien verwendet werden.

Daher betrifft die vorliegende Erfindung auch ein Verfahren zur Herstellung von Bauschäumen, Brandschutzschäumen und Brandschutzmaterialien, dadurch gekennzeichnet, dass
(1) eine erste Komponente, umfassend eine organische Verbindung, welche durch Oxidation mindestens ein Treibgas freisetzt;
(2) eine zweite Komponente, umfassend ein Oxidationsmittel zum Freisetzen des mindestens einen Treibgases durch chemische Reaktion aus der organischen Verbindung, und
(3) eine dritte Komponente, umfassend mindestens ein Wasserglas,
miteinander in Kontakt gebracht werden, wodurch ein Aufschäumen ausgelöst wird und der resultierende Schaum ausgehärtet wird.

Falls das erfindungsgemäße Verfahren zu Brandschutzmaterialien dient, wird das resultierende Produkt gegebenenfalls noch einer Formgebung unterworfen.

Die vorliegende Erfindung betrifft auch die aus der erfindungsgemäßen Zusammensetzung oder der erfindungsgemäßen Zusammensetzung resultierenden Bauschäume, Brandschutzschäume oder Brandschutzmaterialien.

Bauschaum, welcher synonym auch als Montageschaum, Isolierschaum, Füllschaum oder Dämmschaum bezeichnet wird, ist im Sinne der vorliegenden Erfindung ein Ortschaum, der im Bauwesen zur Abdichtung, zum Kleben und zum Dämmen verwendet wird. Man spricht dabei von einem "Ausschäumen". Bauschäume aus dem Stand der Technik basieren normalerweise auf Polyurethan und werden dann auch als PU-Schaum und PUR-Schaum bezeichnet. Entsprechende Bauschäume werden als Einkomponenten-Schaum (1K) oder auch als Zweikomponenten-Variante (2K) verwendet.

Brandschutzschaum im Sinne der vorliegenden Erfindung ist ein feuerhemmendes Material, das beispielsweise verwendet wird, um Hohlräume auszufüllen, die Dichte der Ausgangsmaterialien herabsenkt und durch die entstehenden Mikrohohlräume im Schaum eine bessere Wärmedämmung erreicht. In der Industrie und im Handwerk wird feuerbeständiger Brandschutzschaum häufig zur Abschottung von Kabel- und Rohrdurchführungen, zum Schutz von Stahlträgern oder zur Auskleidung von Wänden und Decken eingesetzt. Im Gewerbe findet er Anwendung in der Elektrotechnik, im Maschinenbau, in der Automobilindustrie sowie im Hoch- und Tiefbau.

Brandschutzmaterialien im Sinne der vorliegenden Erfindung meint hierbei Materialien, die (weitestgehend) nicht brennbar sind, temperaturisolierend bzw. wärmedämmend wirken und damit Hitze- bzw. Flammenschutz gewähren, sowie gegebenenfalls, beispielsweise durch Freisetzung von Wasser, sogar zur Unterbindung von Feuern beitragen können.

Die Gasundurchlässigkeit von Brandschutzmaterialien kann, in spezifischen Situationen, erwünscht sein, da diese einerseits die Zufuhr von Sauerstoff zum Brandherd unterbindet und andererseits den Austritt potenziell gefährlicher Verbrennungsgase unterdrückt.

Um eine bessere Verarbeitung bzw. Anwendung zu ermöglichen, besitzen Brandschutzmaterialien im Allgemeinen neben ihrer Gestaltfestigkeit, welche sie bevorzugt auch bei erhöhten Temperaturen beibehalten, bevorzugt eine geringe Dichte, sowie eine gewisse Härte. Die Gestaltfestigkeit, auch bei erhöhten Temperaturen, ermöglicht den Brandschutz spezifischer, ausgewählter Bereiche. Die geringe Dichte vereinfacht den Transport, sowie die Befestigung dieser Materialien an den gewünschten Positionen (beispielsweise an Objekten). Die geringe Dichte der Brandschutzmaterialien bewirkt außerdem eine geringe Gesamtgewichtszunahme eines Objekts nach Anbringung des Brandschutzmaterials. Die Härte der Brandschutzmaterialien erleichtert die Verarbeitung (beispielsweise das Zurechtschneiden in Formen gewünschter Größe und Gestalt), den Transport, die Lagerung und die Anbringung an Objekten. Neben dem nachträglichen Zurechtschneiden von Brandschutzmaterialien ist die direkte Herstellung der Brandschutzmaterialien in den gewünschten Formen auch von Interesse, da hierdurch der anschließende Arbeitsschritt des Zurechtschneidens entfällt.

Zurechtschneiden im Sinne der Erfindung meint dabei jegliche Form der Bearbeitung, wie beispielsweise Fräsen, Schneiden, Ätzen oder andere dem Fachmann geläufige Verfahren, um ein Brandschutzmaterial der gewünschten Größe und Gestalt zu erhalten. Aufgrund der unterschiedlichsten Anwendungsgebiete der Brandschutzmaterialien, wie beispielsweise im Freien, ist eine hohe Stabilität gegenüber den am Einsatzort vorherrschenden Umweltbedingungen, wie beispielsweise Temperaturschwankungen, direkte Sonneneinstrahlung, Windeinwirkung, Wassereinwirkung bzw. Feuchtigkeit, dieser Materialien essenziell. Die Anforderungen an Brandschutzmaterialien sind dabei, je nach Anwendungsort, unterschiedlich und können daher hiervon abweichen.

Entsprechende Materialien finden in diversen Industriezweigen, wie beispielsweise der Bauindustrie und hierbei insbesondere im vorbeugenden, baulichen Brandschutz Verwendung. Aber auch außerhalb des Brandschutzes besitzen Brandschutzmaterialien, insbesondere auf Grund ihrer temperaturisolierenden Eigenschaften, ein potenziell breites Einsatzgebiet. Die Einsatzbereiche von Brandschutzmaterialien und Materialien zur Wärmeisolation überlappt auf Grund Ihrer sehr ähnlichen Anforderungsprofile oftmals.

Als Anwendungsbereiche mit (hohen) Temperaturdifferenzen (außerhalb eines Brandfalls), für die auch Brandschutzmaterialien verwendet werden können, sollen hier die Metallurgie bzw. die metallverarbeitende Industrie im Allgemeinen, sowie die Wärmeisolation von Öfen im Speziellen, dienen. Auch die "gewöhnliche" Wärmedämmung von Gebäuden, wie beispielsweise von Häusern, bei gleichzeitiger Beibehaltung der genannten Brandschutzeigenschaften durch Brandschutzmaterialien ist denkbar. Weitere Einsatzgebiete sind für den Fachmann offensichtlich.

Die Entwicklung von verbesserten Brandschutzmaterialien wird dabei sowohl durch gesetzliche Vorgaben als auch durch die üblichen Marktmechanismen vorangetrieben und beeinflusst. Daher sollte die Herstellung der Brandschutzmaterialien, welche die genannten Eigenschaften besitzen, möglichst kostengünstig, energiearm und einfach erfolgen. Auch eine möglichst individuell einstellbare Gestalt der Brandschutzmaterialien bzw. eine leichte Bearbeitung zum Erhalt der gewünschten Gestalt sollte gegeben sein. Außerdem sollten bevorzugt unbedenkliche, leicht zugängliche und preiswerte Ausgangsmaterialien verwendet werden können.

Der Begriff "aufschäumend" beziehungsweise "aufblähend" - so wie er im Rahmen der vorliegenden Erfindung verwendet wird - bezeichnet die Wirkungsweise besonderer Materialien, die aufgebläht werden können und dadurch einen isolierenden Körper bilden. Unter den Begriffen "aufblähend" bzw. "aufschäumend" wird im Sinne der vorliegenden Erfindung verstanden, dass die erfindungsgemäße Zusammensetzung einer Volumenvergrößerung durch Gasbildung unterliegt.

Eine feine, gleichmäßige Struktur dieser Blähmasse ist dabei von besonderem Interesse, um eine uniforme und hohe Schutzwirkung über den gesamten Bereich der Blähmasse zu erhalten. Jegliche Art von Rissen sowie größere Hohlräume sind unerwünscht. Des Weiteren ist eine Volumenzunahme nötig, da bei Ausbleiben dieser bzw. bei lediglich minimaler Zunahme die erhaltenen Körper eine in der Regel unerwünscht hohe Dichte aufweisen. Dementsprechend bedeutet im Rahmen der vorliegenden Erfindung eine "schlechte Blähschicht" bzw. ein "schlechtes Blähverhalten", dass die Volumenzunahme nicht ausreichend war und / oder die Struktur des Blähkörpers keine feine, gleichmäßige Struktur aufweist.

Die Wasserbeständigkeit und die Struktur der erhaltenen Brandschutzmaterialien der vorliegenden Erfindung sind optimiert und das Blähverhalten der beanspruchten Zusammensetzungen ist optimal.

Der im Rahmen dieser Erfindung verwendete Ausdruck "festes Brandschutzmaterial" meint dabei, wie auch anhand des Verwendungszwecks als Brandschutzplatte deutlich wird, ein festes Material. Dieses Material ist dabei vorzugsweise nicht pulverig, wobei das Vorhandensein von wenigen pulverigen Resten am ansonsten nicht pulverigen und festen Brandschutzmaterial als festes Material zu verstehen ist.

Die Farbe des Brandschutzmaterials, welches mit dem erfindungsgemäßen Verfahren hergestellt wird, ist vorzugsweise grau oder weiß.

Die Verwendung der erfindungsgemäßen Zusammensetzung erfolgt, wie bereits ausgeführt, durch das Inkontaktbringen der Komponenten, wobei das Oxidationsmittel mit der organischen Verbindung reagiert und mindestens ein Treibgas freisetzt.

Die Oxidation der organischen Verbindung durch chemische Reaktion ist, im Vergleich zum Aufblähen durch Energiezufuhr, eine energiesparsamere Methode. Dadurch eröffnet dieses Vorgehen die Verwendung von niedrigeren Verfahrenstemperaturen, beispielsweise von Raumtemperatur, als bei der Aufblähung durch Energiezufuhr.

Vorzugsweise beginnt die Gasfreisetzung nach Zugabe des Oxidationsmittels in einem Zeitraum von zwischen 20 Sekunden bis 20 Minuten, weiter bevorzugt zwischen 20 Sekunden bis 10 Minuten, weiter bevorzugt zwischen 30 Sekunden bis 5 Minuten, weiter bevorzugt zwischen 1 Minute bis 3 Minuten, weiter bevorzugt zwischen 30 Sekunden und 3 Minuten.

Das resultierende Brandschutzmaterial ist im Wesentlichen formstabil.

Es weist im Allgemeinen eine Dichte von weniger als 0,6 g/cm³, bevorzugt weniger als 0,5 g/cm³, besonders bevorzugt weniger als 0,4 g/cm³, auf.

Werden die erste und zweite Komponente in einer spezifischen Form bereitgestellt und unterläuft anschließend das Inkontaktbringen, so lassen sich die erhaltenen Brandschutzmaterialien vorzugsweise problemlos und im Wesentlichen rückstandslos sowie formstabil aus dieser Form nach Erhärtung entfernen. Die verwendete Form kann anschließend ohne aufwendige Reinigung wiederverwendet werden.

Im Gegensatz zur problemlosen Entfernung der Brandschutzmaterialien aus den spezifischen Formen steht die Herstellung von Verbundmaterialien. Hierbei stehen während des Inkontaktbringens die beiden Komponenten mit Trägermaterialien in Kontakt bzw. kontaktieren diese Trägermaterialien nach der Blähung. Nach der Blähung bilden das Brandschutzmaterial und die Trägermaterialien dabei ein festes Verbundmaterial (bzw. einen Verbundkörper). Die Zusammensetzung weist also ausreichende Klebeeigenschaften auf, sodass bei der Herstellung von Verbundmaterialien vorzugsweise keine zusätzlichen Klebmaterialien verwendet werden müssen. Dieser Aspekt wird im Abschnitt über die Herstellung von Verbundmaterialien weiter behandelt.

### Verwendung der Brandschutzmaterialien

Die nach dem erfindungsgemäßen Verfahren erhaltenen Brandschutzmaterialien finden beispielsweise Verwendung in der Bauindustrie, wie beispielsweise in der Auskleidung und/oder Verkleidung von Türen, Wänden, Böden und Decken, für Durchbrüchen, Durchführungen und sonstigen Öffnungen. Neben dem Gebäudebau, sowie beispielsweise in der Auskleidung von Tunneln und Rohren, können die Brandschutzmaterialien auch im Schiffs- und Fahrzeugbau, wie beispielsweise bei Waggons oder im Transportwesen, wie beispielsweise bei Containern verwendet werden. Auch der Schutz von Kabeln und sonstiger Elektronik, sowie die Verwendung bei persönlicher Schutzkleidung sind möglich.

Die erfindungsgemäßen Brandschutzmaterialien können beispielsweise zum Schutz von einer "Black Box", oder ähnlich sensitiver Elektronik, verwendet werden. Bei einer Black Box handelt es sich um Computer, die beispielsweise in bemannten und/oder unbemannten Luft-, Land- und Wasserfahrzeugen eingesetzt werden. Beispiele für Luftfahrzeuge sind Flugzeuge und Helikopter. Beispiele für Landfahrzeuge sind Züge und Autos. Beispiele für Wasserfahrzeuge sind Schiffe, Boote und U-Boote. Die Black Box zeichnet während des Betriebs diverse Parameter, wie beispielsweise die Geschwindigkeit und die Position des Fahrzeugs auf, kann aber auch dazu dienen weitere Parameter, beispielsweise Geräusche, wie Gespräche, aufzuzeichnen. Bei Bedarf können die aufgezeichneten Daten ausgelesen werden. Dies ist insbesondere bei Unfällen, beispielsweise einem Flugzeugabsturz, und/oder bei Beinaheunfällen von Interesse, um den Unfallhergang und/oder die Unfallursache mittels der aufgezeichneten Daten zu rekonstruieren.

Da insbesondere bei Unfällen oftmals extreme Bedingungen herrschen, muss die Black Box gegen solche Bedingungen geschützt werden. Aus ökonomischen Gesichtspunkten sollte dieser Schutz möglichst platzsparend sein und eine geringe Dichte aufweisen. Die extremen Bedingungen umfassen beispielsweise hohe thermische Energien, beispielsweise durch einen Brand, und hohe kinetische Energien, wie bei einem Aufprall mit hoher Geschwindigkeit. Die Black Box muss eventuell auch gegen diverse Chemikalien geschützt werden, die, insbesondere durch einen Unfall, die Elektronik der Black Box kontaktieren und die gespeicherten Daten kompromittieren können, sodass die Daten nicht bzw. nur teilweise ausgelesen werden können. Solche Chemikalien umfassen beispielsweise Wasser, welches beispielsweise durch Löschung eines Brandes oder durch Leckage eines Wasserfahrzeugs die Black Box kontaktiert, aber auch andere Chemikalien, beispielsweise sonstige in der Brandbekämpfung einsetzbare Chemikalien, bzw. Chemikalien die, beispielsweise durch die hohen thermischen Energien eines Feuers, freigesetzt werden.

### Verbundmaterialien

Das durch das erfindungsgemäße Verfahren hergestellte Brandschutzmaterial ausgehend von der ersten bis dritten Komponente kann in Form von Verbundmaterialien Verwendung finden. Verbundmaterialien, umfassen ein solches Brandschutzmaterial und mindestens ein Trägermaterial.

Die ausgehend von der ersten und zweiten Komponente erhaltene Zusammensetzung weist nicht nur aufblähende Eigenschaften, sondern auch Klebeeigenschaften auf. Die Zusammensetzung eignet sich daher insbesondere auch zur Verklebung von Materialien.

Demgemäß betrifft die vorliegende Erfindung auch Verbundmaterialien, umfassend eine Zusammensetzung eines Brandschutzmaterials ausgehend von der ersten und zweiten Komponente und mindestens ein Trägermaterial, wobei die Zusammensetzung entweder auf dem Trägermaterial aufgetragen oder das Trägermaterial mit dieser Zusammensetzung imprägniert wird.

Das Trägermaterial ist dabei ausgewählt aus der Gruppe, bestehend aus Vliesmaterialien, insbesondere Vliesmaterialien aus Glasfasern, Polyester, Naturfasern, Zellwolle/Zellstoff oder Polyamid; Gewebe aus Glasfasern oder Mischgewebe; Gittergelege aus Glasfasern; Mineralwolle, insbesondere Mineralwolle aus Glas oder Stein; Zellulosematerialien wie Papiermaterialien und Pappmaterialien, insbesondere Papierwaben, Holzfaserplatten oder Wabenkonstruktionen; Kunststoffmaterialien; Metallmaterialien, wie Metallfolien und -bleche, insbesondere Aluminiumfolien und -bleche oder Edelstahlfolien und -bleche; Glasmaterialien, wie Glasfolien und Glaswolle; Baumwollgeweben; Holzmaterialien und Holzwerkstoffplatten wie MDF-, HDF- und Spanplatten; Schäume aus Polyurethan, Polystyrol, Glas- oder Steinschaum, PVC oder Phenol; Materialien aus extrudiertem Polystyrol-Schaum; Materialien aus Polyethylen-Schaum, Polypropylen-Schaum, Polyurethan-Schaum und Polypropylen-Schaum; Folien aus Polypropylen, Polyethylen, Polyurethan oder Silicon und allgemeine Dekoroberflächen wie HPL oder CPL. Weitere geeignete Materialien sind Materialien aus Flachs-, Jute-, Hanf- und Cellulosefasern sowie ganz allgemein Textilmaterialien.

Es ist hierbei bevorzugt ausgewählt aus der Gruppe bestehend aus: Vliesmaterialien; Papiermaterialien und Pappmaterialien, wie Papierwaben; Kunststoffmaterialien; Metallmaterialien, wie Metallfolien, insbesondere Aluminiumfolien; Glasmaterialien, wie Glasfolien und Glaswolle; Baumwollgeweben; Holzmaterialien; Mineralwolle; Materialien aus extrudiertem Polystyrol-Schaum, Polyurethan-Schaum, Polyethylen-Schaum und Polypropylen-Schaum; Materialien aus Jute-, Flachs-, Hanf- und Cellulosefasern; und Textilmaterialien.

Ebenso ist es möglich Verbundaufbauten aus beispielsweise Glasgewebe/Aluminium oder HPL/Glasvlies als Trägermaterial zu verwenden.

Darüber hinaus können die Trägermaterialien für bestimmte Einsatzgebiete perforiert, geschlitzt oder auf andere Weisen strukturiert werden.

Im Rahmen der vorliegenden Erfindung kann das Trägermaterial mit der aufblähenden Zusammensetzung aufgerakelt werden.

Daher können im Rahmen der vorliegenden Erfindung auch Sandwich-Strukturen bereitgestellt werden.

### Sandwich-Struktur

Weiterer Gegenstand der vorliegenden Erfindung ist ein Verbundkörper, umfassend ein Trägermaterial gemäß der obenstehenden Definition, welches mit der Zusammensetzung aus Brandschutzmaterial ausgehend von der ersten bis dritten Komponente versehen wurde, und mindestens eine weitere Schicht, welche durch eine Aluminiumfolie, ein Glasvlies oder ein Papier- oder Pappmaterial gebildet wird und welche auf dem Trägermaterial aufgebracht ist, umfasst.

Das Trägermaterial kann vorzugsweise eine Papier- oder eine Pappwabe sein.

Die weitere Schicht kann beispielsweise durch ein perforiertes Papiervlies oder ein perforiertes Pappmaterial oder Glasvlies gebildet werden.

Diese durch ein perforiertes Papiervlies oder ein perforiertes Pappmaterial gebildete weitere Schicht kann ferner vorzugsweise mit der Zusammensetzung imprägniert sein.

Nach Bereitstellung einer solchen Sandwichstruktur wird ein Brandschutzmaterial erhalten, welches den oben beschriebenen Aufbau besitzt. Verbundkörper mit einem solchen Aufbau werden im Rahmen der vorliegenden Erfindung auch als Sandwichstrukturen bezeichnet.

Diese Sandwichstrukturen weisen nicht nur hervorragende brandhemmende Eigenschaften auf, sondern sind aufgrund der Klebeeigenschaften der Zusammensetzung ausreichend stark verbunden, ohne dass ein zusätzlicher Klebstoff verwendet wird.

Insbesondere bei der Verwendung von Pappwaben als zweite Schicht wird durch die Abdeckung der Pappwaben mit dem durch das erfindungsgemäße Verfahren hergestellten Brandschutzmaterial der Wärmedurchgang durch Konvektion verhindert und gleichzeitig (beispielsweise im Brandfall) durch Verdampfung des Wassers aus der Brandschutzmasse eine kühlende Wirkung erzielt.

Im Brandfall bleiben die resultierenden Sandwichstrukturen intakt und es kommt nicht zu einer Abspaltung einzelner Schichten aus dem Sandwich.

Erfindungsgemäße Sandwichstrukturen umfassen folgenden Aufbau:
(1) eine erste Schicht aus einer Aluminiumfolie, einem Glasvlies, einem Papier- oder Pappmaterial oder einem Verbund davon;
(2) eine zweite Schicht aus Vliesmaterial; Papiermaterial oder Pappmaterial, wie eine Papierwabe; Kunststoffmaterial; Metallmaterial, wie Metallfolien, insbesondere Aluminiumfolie; Glasmaterial, wie eine Glasfolie oder Glaswolle; Baumwollmaterial, Holzmaterial oder Mineralwollmaterial; Materialien aus Polyethylen-Schaum; Materialien aus extrudiertem Polystyrol-Schaum; Materialien aus Polyurethan-Schaum; Materialien aus Polypropylen-Schaum; Materialien aus Flachs, Jute, Hanf und Cellulose;
(3) eine dritte Schicht aus einer Aluminiumfolie, einem Glasvlies, einem Papier- oder Pappmaterial oder einem Verbund davon;
wobei das Verbundmaterial dergestalt aufgebaut ist, dass die erste Schicht auf einer Seite der zweiten Schicht vorgesehen ist und die dritte Schicht auf der anderen Seite der zweiten Schicht vorgesehen ist und das Brandschutzmaterial aus der erfindungsgemäßen Zusammensetzung auf einer Seite oder auf beiden Seiten aufgebracht wurde.

## Patentansprüche

1. Zusammensetzung, enthaltend
(1) eine erste Komponente, umfassend eine organische Verbindung, welche durch Oxidation mindestens ein Treibgas freisetzt; und
(2) eine zweite Komponente, umfassend ein Oxidationsmittel zum Freisetzen des mindestens einen Treibgases durch chemische Reaktion aus der organischen Verbindung,
(3) eine dritte Komponente, umfassend mindestens ein Wasserglas.

2. Zusammensetzung nach Anspruch 1, **dadurch gekennzeichnet, dass** die erste bis dritte Komponente wenigstens teilweise voneinander getrennt vorliegen, wobei die erste und dritte Komponente zusammen vorliegen und die zweite Komponente getrennt von der ersten und zweiten Komponente vorliegt; oder die erste und zweite Komponente zusammen vorliegen und die dritte Komponente getrennt von der ersten und zweiten Komponente vorliegt; oder die zweite und dritte Komponente zusammen vorliegen und die erste Komponente getrennt von der zweiten und dritten Komponente vorliegt.

3. Zusammensetzung nach Anspruch 1 oder 2, **dadurch gekennzeichnet, dass** das Oxidationsmittel ausgewählt ist aus der Gruppe, bestehend aus Peroxiden, Hypochloriten, Hypochlorige Säure, Permanganaten, lodaten, Periodaten und Persulfaten.

4. Zusammensetzung nach Anspruch 1 bis 3, **dadurch gekennzeichnet, dass** die organische Verbindung, die durch Oxidation mindestens ein Treibgas freisetzt, ausgewählt ist aus der Gruppe, bestehend aus Carbonsäuren, Carbonsäureestern und deren Salzen.

5. Zusammensetzung nach einem der Ansprüche 1 bis 4, **dadurch gekennzeichnet, dass** die organische Verbindung, die durch Oxidation mindestens ein Treibgas freisetzt, eine Mono-, Di- oder Tricarbonsäure, ausgewählt aus der Gruppe, bestehend aus Essignsäure, Oxalsäure, Weinsäure, Dioxobernsteinsäure, Mesoxalsäure, Bernsteinsäure, Tartronsäure und Zitronensäure, ist.

6. Zusammensetzung nach einem der Ansprüche 1 bis 5, **dadurch gekennzeichnet, dass** die Zusammensetzung einen Katalysator für die Umsetzung der organischen Verbindung mit dem Oxidationsmittel umfasst, wobei der Katalysator ausgewählt ist aus der Gruppe, bestehend aus Salz- und Oxidverbindungen von Eisen(II), Eisen(III), Kupfer(II), Mangan(II), Mangan(IV), Cobalt(II) und Wolframat(IV).

7. Zusammensetzung nach einem der Ansprüche 1 bis 6, **dadurch gekennzeichnet, dass** die organische Verbindung in einer Menge von 0,3 bis 14 % bevorzugt 0,3 bis 10 % weiter bevorzugt 0,7 bis 7 %, jeweils bezogen auf das Gesamtgewicht der Zusammensetzung, enthalten ist und/oder dass das Oxidationsmittel in einer Menge von 0,15 bis 20 %, bevorzugt 0,15 bis 7 %, weiter bevorzugt 0,3 bis 4,0 % jeweils bezogen auf das Gesamtgewicht der Zusammensetzung, enthalten ist und/oder dass das mindestens eine Wasserglas in einer Menge von 15 bis 70 %, bevorzugt 30 bis 60 %, weiter bevorzugt 35 bis 50 % jeweils bezogen auf das Gesamtgewicht der Zusammensetzung, enthalten ist und/oder dass der Katalysator in einer Menge von 0,03 bis 10 % bevorzugt 0,07 bis 4 % weiter bevorzugt 0,15 bis 3,0 %, jeweils bezogen auf das Gesamtgewicht der Zusammensetzung, enthalten ist.

8. Zusammensetzung nach einem der Ansprüche 1 bis 7, dadurch gegenzeichnet, dass die Zusammensetzung Fasern in einer Menge von 0,1 bis 10 Gew.-%, bevorzugt 0,1 bis 8 Gew.-%, weiter bevorzugt 0,2 bis 6 Gew.-%, weiter bevorzugt 0,2 bis 4 Gew.-%, weiter bevorzugt 0,3 bis 2 Gew.-%, jeweils bezogen auf das Gesamtgewicht der Zusammensetzung, enthält.

9. Zusammensetzung Anspruch 8, **dadurch gekennzeichnet, dass** die Zusammensetzung Silikatfasern enthält, wobei die Silikatfasern eine mittlere Faserlänge von 0,5 bis 7 mm, bevorzugt 1 bis 6 mm, weiter bevorzugt 1,5 bis 5 mm, weiter bevorzugt 2 bis 4 mm, weiter bevorzugt 2,5 bis 3,5 mm, aufweisen.

10. Zusammensetzung nach einem der Ansprüche 1 bis 9, **dadurch gekennzeichnet, dass** mindestens eines der gebildeten Treibgase die Aushärtung des Wasserglases fördert.

11. Verfahren zur Herstellung einer Zusammensetzung gemäß einem der Ansprüche 1 bis 10, **dadurch gekennzeichnet, dass** man
(1) eine erste Komponente, umfassend eine organische Verbindung, welche durch Oxidation mindestens ein Treibgas freisetzt;
(2) eine zweite Komponente, umfassend ein Oxidationsmittel zum Freisetzen des mindestens einen Treibgases durch chemische Reaktion aus der organischen Verbindung,
(3) eine dritte Komponente, umfassend mindestens ein Wasserglas,
bereitstellt und entweder
(a) die erste Komponente und die dritte Komponente miteinander vermischt und die zweite Komponente getrennt von der ersten und dritten Komponente vorhält, oder
(b) die erste und die zweite Komponente miteinander vermischt und die dritte Komponente getrennt von der ersten und zweiten Komponente vorhält, oder
(c) die zweite und die dritte Komponente miteinander vermischt und die erste Komponente getrennt von der zweiten und dritten Komponente vorhält.

12. Verfahren nach Anspruch 11, **dadurch gekennzeichnet, dass** man entweder
(a) die erste Komponente und die dritte Komponente miteinander vermischt und in ein erstes Kompartment einer Kartusche einführt und die zweite Komponente in ein zweites Kompartment der Kartusche einführt, oder
(b) die erste Komponente und die zweite Komponente miteinander vermischt und in ein erstes Kompartment einer Kartusche einführt und die dritte Komponente in ein zweites Kompartment der Kartusche getrennt von der ersten und zweiten Komponente einführt, oder
(c) die zweite Komponente und die dritte Komponente miteinander vermischt und in ein erstes Kompartment einer Kartusche einführt und die erste Komponente in ein zweites Kompartment der Kartusche getrennt von der zweiten und dritten Komponente einführt.

13. Kartusche, umfassend mindestens zwei Kompartments, wobei
(a) das erste Kompartment eine erste und eine dritte Komponente der Zusammensetzung gemäß einem der Ansprüche 1 bis 10 und das zweite Kompartment eine zweite Komponente gemäß einem der Ansprüche 1 bis 10 aufweist, oder
(b) das erste Kompartment eine erste und eine zweite Komponente der Zusammensetzung gemäß einem der Ansprüche 1 bis 10 und das zweite Kompartment eine dritte Komponente gemäß einem der Ansprüche 1 bis 10 aufweist, oder
(c) das erste Kompartment eine zweite und eine dritte Komponente der Zusammensetzung gemäß einem der Ansprüche 1 bis 10 und das zweite Kompartment eine erste Komponente gemäß einem der Ansprüche 1 bis 10 aufweist.

14. Verwendung der Zusammensetzung gemäß einem der Ansprüche 1 bis 10 oder der Kartusche gemäß Anspruch 13 zur Bereitstellung eines Bauschaums, eines Brandschutzschaums und/oder zur Herstellung von Brandschutzmaterialien.

15. Bauschaum oder Brandschutzschaum, erhältlich durch eine Umsetzung der ersten bis dritten Komponente gemäß einem der Ansprüche 1 bis 10 und/oder Brandschutzmaterialien, erhältlich durch eine Umsetzung der ersten bis dritten Komponente gemäß einem der Ansprüche 1 bis 10 und Formgebung.
